(19) Europäisches Patentamt
European Patent Office
Office européen des brevets

(11) EP 1 773 720 B1

(12) FASCICULE DE BREVET EUROPEEN

(45) Date de publication et mention de la délivrance du brevet:
**02.09.2015 Bulletin 2015/36**

(21) Numéro de dépôt: **05788725.9**

(22) Date de dépôt: **07.07.2005**

(51) Int Cl.:
***C01G 25/04*** (2006.01) ***C01G 27/04*** (2006.01)
***C01G 25/00*** (2006.01)

(86) Numéro de dépôt international:
**PCT/FR2005/001757**

(87) Numéro de publication internationale:
**WO 2006/016045 (16.02.2006 Gazette 2006/07)**

# (54) PROCEDE DE SEPARATION ET PURIFICATION DU HAFNIUM ET DU ZIRCONIUM

VERFAHREN ZUR TRENNUNG UND REINIGUNG VON HAFNIUM UND ZIRKONIUM

METHOD FOR SEPARATING AND PURIFYING HAFNIUM AND ZIRCONIUM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.07.2004 FR 0407721**

(43) Date de publication de la demande:
**18.04.2007 Bulletin 2007/16**

(73) Titulaire: **AREVA NP**
**92400 Courbevoie (FR)**

(72) Inventeurs:
- **DELONS, Laurence**
  **69230 Saint Genis Laval (FR)**
- **LAGARDE, Stéphane**
  **F-38220 ST PIERRE DE MESAGE (FR)**
- **FAVRE-REGUILLON, Alain**
  **F-69100 VILLEURBANNE (FR)**
- **PELLET-ROSTAING, Stéphane**
  **F-69100 VILLEURBANNE (FR)**
- **LEMAIRE, Marc**
  **F-69100 VILLEURBANNE (FR)**
- **PORIEL, Ludovic**
  **92260 Fontenay aux Roses (FR)**

(74) Mandataire: **Colombet, Alain André et al**
**Cabinet Lavoix**
**2, Place d'Estienne d'Orves**
**75441 Paris Cedex 09 (FR)**

(56) Documents cités:
**WO-A-97/04141 DE-B- 1 288 576**
**FR-A- 2 250 707 FR-A- 2 629 360**
**FR-A- 2 823 740 US-A- 5 762 890**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 773 720 B1

## Description

La présente invention est relative à un procédé permettant la séparation et la purification du hafnium et du zirconium.
Le minerai zircon contient du zirconium, de façon majoritaire, et du hafnium (généralement de 1 à 3% en poids). Pour son usage dans la filière nucléaire, après carbochloration du minerai, le zirconium doit être débarrassé au maximum du hafnium, lequel se retrouve donc dans les fractions résiduelles des procédés de purification du zirconium. Le hafnium peut être valorisé à son tour, ce qui nécessite sa propre purification.
A titre d'exemple, l'un des procédés les plus performants employés actuellement pour la purification du zirconium est celui connu sous le nom de procédé de séparation en sels fondus, ou distillation extractive en sels fondus (FR-A-2 250 707 et FR-A-2 629 360). Ce procédé utilise une colonne de distillation à plusieurs plateaux, supportant chacun une couche de sels fondus. Un mélange de $ZrCl_4$ et $HfCl_4$, issu de la carbochloration du minerai zircon, est introduit dans la colonne à l'état gazeux. Une fraction $ZrCl_4$ est récupérée dans la phase solvant en pied de colonne, tandis qu'une fraction résiduelle enrichie en $HfCl_4$ est entraînée avec la phase vapeur en tête de colonne. Cette fraction résiduelle peut ainsi comporter par exemple de l'ordre, de 70% de $ZrCl_4$ et de 30% de $HfCl_4$ (% massique). Une installation industrielle fonctionnant selon ce principe peut être reconditionnée pour retraiter cette fraction résiduelle et récupérer le hafnium, ce qui se traduit par un fonctionnement discontinu de l'installation.
US 5 762 890 décrit un procédé de séparation du zirconium et de l'hafnium à partir du zircon comprenant une étape de carbochloration puis une hydrolyse partielle des tétrachlorures dans l'eau, la glace ou en vapeur avec de la vapeur d'eau.
Par ailleurs, la demande de certaines industries en hafnium toujours plus pur induit aussi un besoin en un procédé permettant de purifier des quantités importantes de hafnium très pur.

Un objectif de l'invention est de proposer un perfectionnement au procédé industriel de séparation zirconium/hafnium par distillation extractive en sels fondus, permettant en sus la récupération et purification du hafnium.

Un autre objectif de l'invention est de proposer un procédé industriel permettant à la fois de purifier efficacement, et en volumes importants, le hafnium et le zirconium. L'invention a ainsi pour objectif de proposer un tel procédé permettant de produire des fractions enrichies en hafnium ayant des teneurs en zirconium métal inférieures ou égales à 100 ppm mole, et même inférieures ou égales à 50 ppm mole, exprimé par rapport à l'hafnium métal.

Un autre objectif de l'invention est de proposer un tel procédé qui soit susceptible de fonctionner en continu.

La déposante a trouvé que les meilleures performances pour la séparation du hafnium à partir d'un mélange pulvérulent de $ZrCl_4$ et $HfCl_4$ issu de la distillation extractive étaient obtenues à condition d'opérer de la manière suivante : hydrolyser ce mélange dans une solution aqueuse d'acide inorganique fort, de manière à former une solution aqueuse ayant de 7 à 12 moles d'acide par litre ; faire passer la solution obtenue à l'étape précédente dans une résine échangeuse d'anions, de préférence une résine portant des groupements amine, ammonium ou azine, la résine utilisée étant de préférence pré-conditionnée avec une solution aqueuse d'acide inorganique fort ayant de 7 à 12 moles d'acide par litre, puis laisser éluer et récupérer une fraction de ladite solution aqueuse ayant de 7 à 12 moles d'acide par litre, enrichie en hafnium.

L'invention a donc pour objet un procédé pour la séparation et la purification du hafnium et du zirconium à partir d'un mélange contenant $ZrCl_4$ et $HfCl_4$, comprenant :

(1) introduire le mélange de $ZrCl_4$ et $HfCl_4$ sous forme vapeur dans une colonne de distillation extractive en continu ;
(2) procéder à l'absorption sélective des vapeurs de $ZrCl_4$ et $HfCl_4$ par un solvant d'extraction circulant à contre-courant desdites vapeurs dans la colonne de distillation ;
(3) soutirer un mélange liquide ou gazeux de $ZrCl_4$ et $HfCl_4$ enrichi en $ZrCl_4$;
(4) soutirer un mélange liquide ou gazeux de $ZrCl_4$ et $HfCl_4$ enrichi en $HfCl_4$ ;
(5) hydrolyser le mélange obtenu à l'étape (4) dans une solution aqueuse d'acide inorganique fort, de manière à former une solution aqueuse ayant de 7 à 12 moles d'acide par litre ;
(6) faire passer la solution obtenue à l'étape (5) dans une résine échangeuse d'anions ;
(7) laisser éluer et récupérer une fraction enrichie en hafnium.

On notera que dans toute la description et les revendications, les termes « comprend », « comprenant » et similaires dérivés du verbe « comprendre », ont la signification usuellement attribuée en droit des Etats-Unis d'Amérique ; ces termes signifient que d'autres caractéristiques peuvent être ajoutées; ils ont le même sens que « inclure », « incluant », etc.

Suivant un aspect de l'invention, le procédé de séparation zirconium/hafnium a pour point de départ un mélange $ZrCl_4$ et $HfCl_4$ issu de la carbochloration du minerai zircon. Ce minerai contient usuellement un ratio pourcentage en poids hafnium/zirconium compris entre 1/99 et 3/97. Suivant une modalité de l'invention, le mélange de chlorures issu de la carbochloration, a subi un ou des traitements destinés à éliminer certains métaux ou impuretés.

Les opérations (1) à (4) correspondent à un procédé de purification du zirconium par distillation extractive. Des

exemples d'un tel procédé sont décrits dans FR-A-2 250 707, FR-A-2 629 360 et FR-A-2 823 740, documents auxquels l'homme du métier peut se référer pour mettre en oeuvre ces étapes. A l'étape (1), on introduit le mélange de $ZrCl_4$ et $HfCl_4$ sous forme de vapeur. Suivant une première modalité, on part d'un mélange solide de $ZrCl_4$ et $HfCl_4$, que l'on sublime, et l'on introduit les vapeurs de $ZrCl_4$ et $HfCl_4$ dans la colonne de distillation. Typiquement, la température de sublimation est de l'ordre de 330 °C pour une pression de 1 atm. Suivant une deuxième modalité, on part d'une solution de $ZrCl_4$ et $HfCl_4$, que l'on évapore, et l'on introduit les vapeurs de $ZrCl_4$ et $HfCl_4$ dans la colonne de distillation. La température d'évaporation dépend du solvant de dissolution des tétrachlorures, et est généralement comprise entre 200 et 550°C.

Suivant une modalité avantageuse, cette introduction sous forme vapeur dans la colonne et la distillation dans la colonne à l'étape (2) sont réalisées sous une surpression par rapport à la pression atmosphérique, et cette surpression peut être typiquement comprise entre 0,0005 et 0,5 MPa, et de préférence entre 0,0005 et 0,15 MPa.

Suivant une modalité avantageuse, l'étape (1) comporte (suivant l'enseignement de FR-A-2 629 360) :

a) dissolution desdits chlorures dans un solvant liquide à pression atmosphérique et à la température $\Theta_1$ pour obtenir une solution de concentration donnée, c'est-à-dire calculable et réglable ; on emploie un solvant permettant la dissolution des tétrachlorures, par exemple l'un de ceux décrits ci-après à titre de solvant d'extraction ;
b) transfert de cette solution, éventuellement avec stockage intermédiaire, dans un bac de réserve ;
c) mise sous pression et réglage du débit de cette solution à des valeurs constantes par des moyens connus, par exemple par utilisation d'une pompe volumétrique, ou par utilisation d'une pompe centrifuge complétée par un débitmètre et un régulateur de débit ;
d) introduction de cette solution mise sous pression et à débit constant dans un évaporateur relié à la colonne de distillation, ledit évaporateur étant à la pression de la colonne au point d'alimentation;
e) réchauffage de la solution dans cet appareil à une température choisie $\Theta$ supérieure à $\Theta_1$ et suffisante pour vaporiser l'essentiel desdits chlorures contenus dans la solution, les vapeurs passant alors avec un débit stable et connu dans ladite colonne.

La température de dissolution $\Theta_1$ peut être comprise entre 200 et 400°C, typiquement entre 250 et 350°C. La pression à partir de l'étape c) peut aller typiquement jusqu'à 0,5 MPa, de préférence jusqu'à 0,15 MPa, et être notamment comprise entre 0,0005 et 0,15 MPa. La température d'évaporation $\Theta_2$ peut être comprise entre 200 et 550°C, notamment entre 430 et 550 °C, typiquement entre 450 et 500°C.

FR-A-2 629 360 décrit en détail, en liaison avec sa figure 1, un procédé et un dispositif d'introduction des tétrachlorures sous forme vapeur, basé sur la modalité qui vient d'être décrite. Ce procédé et ce dispositif sont utilisables pour mettre en oeuvre l'invention.

Suivant un aspect de l'invention, on utilise un solvant d'extraction liquide choisi pour avoir une différence de volatilité entre les tétrachlorures de Zr et les tétrachlorures de Hf qui soit la plus élevée possible.

Le solvant d'extraction comprend de préférence un sel fondu. La température de fusion du sel conditionne la température de dissolution des tétrachlorures dans le sel et la température dans la colonne de distillation. La température est choisie de manière que le sel soit au moins substantiellement fondu. Cette température sera généralement comprise entre 200 et 400°C, typiquement entre 250 et 350°C.

Suivant un premier type, le solvant d'extraction comprend un chlorure de métal alcalin et un chlorure métallique acide (chlorure de métalloïde ou de métal de transition). Le chlorure de métal alcalin peut comprendre comme métal Li, Na, K, Cs. On préfère K et Na pour former KCl et NaCl. Le chlorure métallique acide est de préférence $AlCl_3$ ou $FeCl_3$, ou un mélange de ces deux espèces. Le rapport molaire chlorure d'aluminium et/ou chlorure ferrique sur chlorure de métal alcalin est typiquement supérieur à 0,95 et inférieur à 1,30.

Suivant une première modalité avantageuse tirée de FR-A-2 250 707, on utilise un solvant quasi-stoechiométrique de formule

| | | |
|---|---|---|
| | $nAlCl_3$ , | pNaCl |
| ou | $nAlCl_3$ , | pKCl |
| ou | $nFeCl_3$ , | pNaCl |
| ou | $nFeCl_3$ , | pKCl |
| ou | $n(AlCl_3, FeCl_3)$, | pNaCl |
| ou | $n(AlCl_3, FeCl_3)$, | pKCl |

Le rapport n/p est de préférence maintenu supérieur à 0,95 et de manière préférée entre 1,04 et 1,10.

Suivant une modalité préférentielle tirée de FR-A-2 250 707, on emploie les solvants ci-dessus qui comprennent des sels de potassium.

Suivant une modalité encore plus préférée, tirée de FR-A-2 629 360, on utilise le chloroaluminate de potassium $KAlCl_4$ ou ($AlCl_3$, KCl). Le rendement d'évaporation par réchauffage de la solution entre 430 et 550° C, de préférence entre 450 et 500°C, est supérieur à 70 % et typiquement compris entre 80 et 95 % pour une pression dans l'évaporateur où est fait ce préchauffage, comprise entre 0,0005 et 0,5 MPa, de préférence entre 0,0005 et 0,15 MPa. Grâce à une concentration et un débit de solution stables et à une température de réchauffage stable, on arrive aisément à obtenir un débit de vapeurs de $ZrCl_4$ hafnié dans la colonne, sous une pression stable et connu à mieux que 1 % près.

Suivant un autre aspect, on emploie un autre type de solvant, conforme à l'enseignement de FR-A-2 823 740. Ce solvant d'extraction comprend au moins un solvant métallique alcalin du type de ceux habituellement utilisés en distillation extractive du zirconium, c'est-à-dire préférentiellement au moins un sel d'un chlorure de métal alcalin et d'un chlorure métallique acide A, tel que $AlCl_3$ ou $FeCl_3$ (ce qui donne un chloroaluminate ou un chloroferrate alcalin). A ce "solvant de base", on ajoute un ou plusieurs chlorures métalliques ou métalloïdiques acides B plus faibles que celui ou ceux entrant dans la composition dudit "solvant de base", conduisant ainsi à un sel fondu au moins ternaire. Par définition, un chlorure est dit acide s'il est susceptible de se lier avec des ions $Cl^-$. Par "plus faible" parlant de l'acidité du chlorure métallique B, on entend que l'élément lié au chlore dans ce chlorure métallique (ou métalloïdique) acide B a une affinité pour les ions $Cl^-$ inférieure à celle de l'élément lié au chlore dans le chlorure métallique acide A. L'acidité du chlorure ou d'un mélange de chlorures, c'est-à-dire son pCl défini par $pCl = -log[Cl^-]$, peut être déterminée de manière simple à partir de la mesure du potentiel libre du chlorure ou du mélange. Il suffit de le mesurer sur un fil d'aluminium et par rapport à une électrode de référence composée d'un fil d'aluminium trempant dans un mélange $AlCl_3$-KCl saturé en KCl. Le pCl est obtenu par la formule : $E = E_0 - (4RT/3F)ln[Cl^-]$ avec $E_0$ = potentiel libre du chlorure ou du mélange de chlorures, R = constante = 8,314, T = température en Kelvins, F = constante de Faraday, $ln[Cl^-]$ = logarithme népérien de la concentration en ion $Cl^-$.

Les chlorures métalliques ou métalloïdiques acides B sont notamment choisis parmi les chlorures d'alcalino-terreux (e.g. Mg), les chlorures de métaux de transition (e.g. Zn, Cu, Ni, Co, et éventuellement Fe ; Zn et Cu étant préférés parmi les métaux de transition), ou certains métalloïdes tels que Pb et Sn. Préférentiellement, les chlorures métalliques acides B sont au degré d'oxydation II. Avantageusement ils possèdent en outre une coordinence de 4 dans le mélange. Il s'agit de préférence du chlorure de magnésium $MgCl_2$ et/ou du chlorure de zinc $ZnCl_2$.

Dans le "solvant de base", le chlorure de métal alcalin peut comprendre comme métal Li, Na, K, Cs. On préfère KCl et NaCl. Le chlorure métallique acide A et le chlorure métallique ou métalloïdique acide B sont choisis de façon à respecter la règle de plus faible acidité de B/A énoncée ci-dessus. De préférence, le chlorure métallique acide A est $AlCl_3$ et/ou $FeCl_3$. On préfère avoir les combinaisons $AlCl_3$ + KCl et/ou $FeCl_3$ + NaCl comme solvant de base. Il est possible d'utiliser $AlCl_3$ dans le solvant de base et un chlorure de fer comme chlorure métallique ou métalloïdique acide B. Dans ce cas, le chlorure de fer est de préférence $FeCl_2$.

Conformément aux modes de réalisation préférés concernant ce type de solvant d'extraction, on a :

- solvant de base :

  $AlCl_3$ et/ou $FeCl_3$ comme chlorure métallique acide A, de préférence avec KCl et/ou NaCl comme chlorure de métal alcalin;
  plus préférentiellement $AlCl_3$ + KCl et/ou $FeCl_3$ + NaCl ;

- chlorure métallique acide B :

  $MgCl_2$ et/ou $ZnCl_2$ et/ou $CuCl_2$, de préférence $MgCl_2$ et/ou $ZnCl_2$.

Avantageusement, le rapport molaire chlorure métallique acide A (e.g. chlorure d'aluminium et/ou chlorure ferrique) sur chlorure de métal alcalin est compris entre 0,7 et 1,3. Il est de préférence compris entre 0,8 et 1. Le rapport molaire chlorure métallique ou métalloïdique acide B sur chlorure métallique acide A (e.g. chlorure d'aluminium et/ou chlorure ferrique) est avantageusement compris entre 0,01 et 1,5, de préférence entre 0,1 et 0, 3.

Avec ce type de solvant d'extraction, la distillation peut notamment être conduite à une température comprise entre 250 et 550 °C, de préférence entre 250 et 350 °C.

Suivant le solvant d'extraction utilisé, le mélange riche en zirconium peut être obtenu en tête de colonne, sous forme de vapeur, ou en pied de colonne, sous forme liquide. Le mélange riche en hafnium est obtenu à l'inverse, en pied de colonne, sous forme liquide, ou en tête de colonne, sous forme vapeur. Les mélanges sont ensuite de préférence traités avec passage dans un condenseur pour récupérer des mélanges pulvérulents.

Avec les solvants du premier type, par exemple décrits dans FR-A-2 250 707 et FR-A-2 629 360, le mélange riche en zirconium est obtenu à l'étape (3) en pied de colonne, tandis que des vapeurs enrichies en hafnium sont récupérées en tête de colonne (étape (4)). Le mélange gazeux $ZrCl_4$ et $HfCl_4$ enrichi en $HfCl_4$ est introduit dans un condenseur, d'où l'on récupère un mélange pulvérulent.

Avec les solvants du deuxième type décrits dans FR-A-2 823 740, le mélange riche en hafnium est obtenu a l'étape (3) en pied de colonne, tandis que les vapeurs enrichies en zirconium sont récupérées en tête de colonne (étape (4)). Le mélange gazeux $ZrCl_4$ et $HfCl_4$ enrichi en $ZrCl_4$ est introduit dans un condenseur, d'où l'on récupère un mélange pulvérulent.

La récupération du tétrachlorure enrichi en pied de colonne (hafnium ou zirconium suivant le solvant utilisé) peut être réalisée comme suit. La solution enrichie issue du pied de colonne est introduite dans une colonne, par exemple colonne dite de « stripping »ou colonne d'épuisement, où elle s'écoule contre un courant de gaz, par exemple de l'azote. Le gaz entraîne les vapeurs du tétrachlorure enrichi vers le haut de cette colonne. Suivant un mode de réalisation préféré, ce flux est ensuite dirigé vers un condenseur pour récupérer le tétrachlorure enrichi sous forme solide. Ainsi, avec un solvant d'extraction du type chloroaluminate alcalin ou chloroferrate alcalin, e.g. $KAlCl_4$ ou ($AlCl_3$, KCl), le gaz entraîne des vapeurs enrichies en tétrachlorure de zirconium vers le condenseur. En variante, on remplace l'entraînement par le gaz, par une légère dépression, par exemple appliquée dans le condenseur, e.g. au moyen d'une pompe à vide. Suivant une caractéristique, la solution en pied de colonne de stripping peut être recyclée en haut de la colonne de distillation, par exemple à travers l'absorbeur qui sera décrit plus loin. Suivant une autre caractéristique, entre le pied de colonne de distillation et la colonne de stripping peut être disposé un bouilleur permettant une recirculation partielle du solvant en pied de colonne de distillation.

La récupération du tétrachlorure enrichi en tête de colonne peut être réalisée comme suit. Les vapeurs enrichies en hafnium ou en zirconium (suivant le solvant utilisé) passent de la colonne de distillation dans un absorbeur muni d'un dispositif de refroidissement. Cet absorbeur permet de dissoudre dans le solvant une partie des vapeurs de tétrachlorures, tandis que les vapeurs restantes sont récupérées. Suivant un mode de réalisation préféré, ces vapeurs sont ensuite dirigées vers un condenseur pour récupérer sous forme solide une phase enrichie en tétrachlorure de hafnium ou de zirconium (suivant le solvant d'extraction utilisé). Ainsi, avec un solvant d'extraction du type chloroaluminate alcalin ou chloroferrate alcalin, e.g. $KAlCl_4$ ou ($AlCl_3$, KCl), des vapeurs enrichies en tétrachlorure de hafnium sont dirigées vers le condenseur.

Suivant une caractéristique, on procède à une élimination de l'aluminium éventuellement présent, de préférence à la fois de la fraction enrichie en hafnium et de la fraction enrichie en zirconium. Suivant un premier aspect, on élimine l'aluminium des vapeurs issues de la tête de colonne, en amont du condenseur lorsqu'il en est prévu un. Suivant un deuxième aspect, on élimine l'aluminium en aval de la colonne de stripping et en amont du condenseur lorsqu'il en est prévu un. De préférence, on exécute ces deux étapes. Un exemple de dispositif d'élimination de l'aluminium est celui décrit dans FR-A-2 543 162.

Suivant une caractéristique de l'invention, la distillation extractive est conduite pour produire un mélange Hf+Zr de composition :

- Zr/(Zr+Hf) allant de 70 à 85 % molaire (55 à 75 % massique),
- Hf(Zr+Hf) allant de 15 à 30 % molaire (25 à 45 % massique)

Suivant une première modalité de mise en oeuvre de l'étape (5), on utilise une fraction enrichie en hafnium obtenue sous forme pulvérulente dans le condenseur. Suivant une caractéristique, la fraction enrichie solide obtenue dans le condenseur est soutirée en pied de condenseur pour alimenter l'étape (5) où l'on hydrolyse ladite fraction pulvérulente à l'aide de la solution acide, avant de la diriger vers la résine à l'étape (6). Dans un mode de réalisation avantageux, soutirage, hydrolyse et circulation vers la résine sont effectués en continu.

Suivant une deuxième modalité, ce sont les vapeurs enrichies obtenues à l'étape (4) qui sont utilisée pour l'étape (5). Suivant une caractéristique, on fait barbotter ces vapeurs dans la solution acide, de manière à assurer l'hydrolyse de la fraction, puis on envoie le produit de l'hydrolyse vers la résine à l'étape (6). Dans un mode de réalisation avantageux, les vapeurs sont envoyées en continu dans la solution d'hydrolyse, et la solution obtenue est amenée en continu vers la résine.

Suivant un aspect préféré, la résine utilisée à l'étape (6) est mouillée (conditionnée ou pré-conditionnée) avec une solution aqueuse d'acide inorganique fort ayant de 7 à 12 moles d'acide par litre. Une modalité préférée consiste à conditionner la résine avec une solution comprenant le même acide qu'à l'étape (5), et ayant une concentration en acide proche ou identique à la solution obtenue à cette étape.

Sans vouloir être lié par la théorie, on pense que la solution dite d'alimentation obtenue à l'étape (5) contient des composés du zirconium sous forme anionique, et des composés du hafnium généralement sous forme non ionique, que lors du passage dans la résine, les anions principalement à base de zirconium sont retenus par la résine, par un processus d'échange d'ions, si bien que, avant saturation d'une certaine proportion des groupements de la résine par les ions à base de zirconium, l'éluat sortant de la résine contient surtout les composés du hafnium.

On fait donc passer la solution d'alimentation à travers la résine de manière à produire un éluat, et l'on récupère une fraction riche en hafnium dans la solution d'acide inorganique fort ayant de 7 à 12 moles d'acide par litre. Le degré de pureté ou d'enrichissement en hafnium peut varier en fonction de l'instant où le prélèvement est effectué, et l'on peut

donc récupérer une fraction ou plusieurs fractions ayant des degrés de pureté différents. On peut ainsi récupérer, par exemple, une fraction ayant une teneur en zirconium métal inférieure ou égale à 100 ppm molaire exprimée par rapport à l'hafnium métal, une fraction ayant une teneur inférieure ou égale à 50 ppm, une fraction ayant une teneur inférieure ou égale à 30 ppm et éventuellement plusieurs de ces fractions. Suivant une modalité encore plus avantageuse, on récupère une fraction de pureté d'environ 20 ppm molaire de Zr métal par rapport à Hf métal.

Cette phase d'élution de fraction riche en hafnium peut être contrôlée pendant le processus de purification, auquel cas on procède à des prélèvements d'éluat et à un contrôle concernant leur teneur en composé du zirconium et/ou du hafnium. Les éluats peuvent être analysés par exemple par ICP-AES (Inductively Coupled Plasma - Atomic Emission Spectroscopy) pour déterminer la pureté des fractions en hafnium ou en zirconium, ce qui permet notamment de sélectionner les fractions, s'il y a lieu. Davantage de précisions sont données dans la description détaillée. On peut aussi disposer d'un mode opératoire standardisé.

Une fois qu'un certain degré de saturation des groupements de la résine a été atteint, l'éluat sortant de la résine tend à correspondre globalement à la solution d'alimentation. La résine peut ensuite subir des traitements pour être reconditionnée et/ou pour récupérer les métaux hafnium et zirconium encore présents.

Suivant un aspect de l'invention, après l'étape (7), on procède à un nettoyage [étape (8)] de la résine afin d'éliminer le zirconium et le hafnium qui étaient présents dans la résine, en interstitiel, sans y être accroché.

Suivant une première modalité de cette étape (8), on vide la résine de son contenu liquide, par exemple par gravité ou par une chasse au moyen d'air ou de gaz (e.g. azote).

Suivant une deuxième modalité de cette étape (8), on fait circuler dans la résine une solution de rinçage, qui a la particularité de ne pas entraîner le décrochage des composés du zirconium liés à la résine par interaction ionique. On utilise de préférence une solution d'acide inorganique fort ayant de 7 à 12 moles d'acide par litre, et ayant un nombre de moles d'acide par litre supérieur ou sensiblement identique à la solution d'alimentation formée à l'étape (5). Par sensiblement identique, on entend que la concentration en acide peut varier par rapport à l'étape (5) y compris vers des valeurs inférieures, tout en restant dans des limites qui n'entraînent pas de décrochage sensible des composés du zirconium liés à la résine par interaction ionique. On préfère utiliser le même acide (e.g. HCl) qu'à l'étape (5). On préfère aussi utiliser la même concentration en acide. Le produit de rinçage peut être à son tour réintroduit dans le procédé à l'étape (5).

Suivant une troisième modalité de l'étape (8), on commence par vider la résine, e.g. par gravité ou par chasse, puis on la rince comme il vient d'être décrit.

Suivant une modalité préférée, l'étape (8) est effectuée juste après la récupération de la fraction riche ou de la dernière fraction riche en hafnium. Le suivi de la phase d'élution par analyse des éluats mentionné plus haut permet de déterminer ce moment où il devient inutile de poursuivre l'alimentation en mélange zirconium et hafnium.

Suivant un aspect de l'invention, après l'étape (8), on procède à un lavage à l'eau ou avec une solution aqueuse équivalente qui permet de décrocher les composés du zirconium liés à la résine par interaction ionique et la récupération d'une solution aqueuse riche ou purifiée en zirconium : étape (9).

Par « solution aqueuse équivalente », on entend une solution aqueuse capable de décrocher le composé du zirconium, par exemple une solution d'acide de force inférieure à la solution utilisée aux étapes précédentes, e.g. une solution aqueuse comportant de 0 à 7 moles, plus particulièrement de 0 à 6 moles d'acide par litre, choisie inférieure à la solution utilisée précédemment.

Suivant une modalité particulière de cette étape (9), on procède à un décrochage graduel à l'aide de solutions aqueuses ayant des concentrations en acide décroissantes. De préférence, on utilise de l'eau en dernier lieu. Par exemple on réalise au moins un premier décrochage à l'aide d'une solution aqueuse acide conforme (par exemple HCl 0,1 à 7, notamment 0,1 à 6 moles par litre) suivi d'un décrochage de finition à l'eau.

La ou les solutions de décrochage entraînent le décrochage des composés métalliques fixés à la résine par interaction ionique, et cette étape permet donc de récupérer une ou plusieurs fractions riches ou purifiées en zirconium avec des teneurs en Hf métal par exemple inférieures ou égales à 250, 50, 40, 25 ou 10 ppm molaire exprimé par rapport à Zr+Hf.

Lorsque la récupération d'une fraction riche en zirconium n'est pas retenue, l'étape (8) peut être omise et l'on passe directement de l'étape (7) à l'étape (9).

L'acide inorganique fort utilisé dans les différentes étapes est défini comme ayant un pKa par rapport à l'eau compris entre -12 et 4. Il est de préférence choisi parmi HCl et $H_2SO_4$. Suivant un mode de réalisation préféré, la solution acide formée à l'étape (5) et les solutions d'acide utilisées aux autres étapes contiennent de 7,5 à 9,5 moles d'acide par litre. De préférence, les solutions d'acide utilisées lors des différentes étapes sont similaires ou identiques. Suivant le mode de réalisation préféré de l'invention, on utilise des solutions aqueuses de HCl à toutes les étapes, et notamment des solutions contenant de 7,5 à 9,5 moles d'acide par litre.

La résine utilisée comporte une phase solide qui résiste aux solutions acides employées dans la conduite du procédé. Convient toute résine organique usuelle portant des groupements fonctionnels cationiques, et dont le contre-ion (anion) est capable de s'échanger avec les composés anioniques du zirconium présents dans la solution acide

d'alimentation conforme à l'invention. Les groupements sont avantageusement des groupements amine, ammonium et/ou azine.

Les résines organiques peuvent être des résines anioniques fortes ou faibles. Leurs groupements fonctionnels sont de préférence représentés par, ou comprennent :

- les amines primaires, secondaires ou tertiaires, les substituants autres que H étant préférentiellement choisis parmi alkyle linéaire ou ramifié en $C_1$ à $C_6$, phényle ou alkylphényle, avec alkyle comme défini supra, hydroxyalkyl linéaire ou ramifié en $C_1$ à $C_6$, et combinaisons ; dans un mode de réalisation préféré, les substituants autres que H sont des alkyles ;
- les ammoniums quaternaires dans lesquels les substituants peuvent être choisis parmi les alkyles, linéaires, ramifiés ou cycliques, en $C_1$ à $C_6$, phényle, ou alkylphényle, avec alkyle comme défini supra, hydroxyalkyl linéaire ou ramifié en $C_1$ à $C_6$, et combinaisons ; dans un mode de réalisation préféré, les substituants sont des alkyles ;
- les azines : les hétérocycles azotés tels que pyridine, 1,2-diazabenzène (ou pyridazine), 1,3-diazabenzene (ou pyrimidine) et 1,4-diazabenzene (ou pyrazine), 1,2,3-triazabenzène (ou 1,2,3-triazine), 1,2,4-triazabenzène (1,2,4-triazine), 1,3,5-triazabenzène (ou 1,3,5-triazine), et les analogues ammoniums quaternaires correspondant obtenu par substitution des azotes par des groupements alkyles linéaires ou ramifiés en $C_1$ à $C_6$.

Il est préférable d'utiliser des résines dont le contre-ion est de même nature que l'acide utilisé pour la solution acide. Avec HCl, on préfère utiliser ces résines sous forme de chlorure (contre-ion $Cl^-$). Avec l'acide sulfurique, on préfère utiliser ces résines sous forme de sulfate (contre-ion $SO_4^=$).

Suivant un premier mode de réalisation, la phase solide est formée de résine sous forme particulaire, e.g. sous forme de billes plus ou moins sphériques, ayant des dimensions moyennes de particule ou diamètres moyens appropriés, généralement compris entre 30 et 800 micromètres. L'homme du métier sait parfaitement choisir le polymère ou copolymère formant la phase solide, son degré de réticulation et la taille des particules. Les résines utilisées dans les exemples ont montré que des dimensions moyennes de particule comprises entre 100 et 700, de préférence entre 200 et 600 micromètres étaient bien adaptées.

Parmi les polymères et copolymères utilisables, on peut citer ceux à base de motifs styréniques, acrylates et méthacrylates. Conformément à l'invention, on peut donc employer des résines du type polystyrène, polyacrylate, polyméthacrylate et les copolymères polyacrylate/polyméthacrylate. Les résines à base de polystyrène constituent une modalité préférée.

Suivant un deuxième mode de réalisation, la résine comporte des particules minérales fonctionnalisées par des fonctions similaires à celles décrites pour les résines organiques, en particulier amines, ammoniums quaternaires et azines (supra). Les particules minérales composant une telle résine sont par exemple des particules de silice, zéolithes, aluminosilicates et leurs mélanges.

Suivant un troisième mode de réalisation, la résine comporte des particules minérales (e.g. silice, zéolithes, aluminosilicates et leurs mélanges), enrobées ou portant en surface un polymère ou copolymère organique fonctionnalisé tel que décrit supra.

La capacité de la résine à fixer les ions métalliques exprimée en milli-équivalent par mL de résine humide est de préférence supérieure à 0,5, mieux encore supérieure ou égale à 1.

Les étapes (4) et suivantes du procédé de l'invention ne nécessitent pas une installation complexe. Les étapes (5) et suivantes peuvent ainsi être conduites dans une colonne ou dans tout récipient (ci-après colonne ou analogue) de volume adapté au volume de résine employé, ce volume étant lui-même adapté à la solution à traiter, de manière à purifier le hafnium, à partir de la même colonne ou analogue.

Un paramètre de fonctionnement est le débit de la solution acide dans la colonne ou analogue. Le débit ne doit pas être trop rapide pour que l'échange d'ions puisse se faire convenablement. Mais il doit être suffisant pour favoriser une concentration en hafnium importante dans l'éluat à l'étape (7) dès que la résine est saturée en composés du hafnium. Ce paramètre peut donc être facilement appréhendé par de simples essais de routine, et analyse des éluats par exemple par ICP-AES. On peut aussi disposer d'un procédé standardisé. On peut cependant préciser que convient bien, un débit compris entre 0,25 et 10, de préférence entre 2 et 5 volumes de solution acide par heure.

Dans la présente description, la notion de volume se réfère au volume de résine utilisé. Ainsi, si l'on parle de 2 volumes de solution, cela signifie que l'on utilise un volume de solution représentant 2 fois le volume de la résine utilisée.

Après rinçage à l'eau et/ou avec une solution acide de force réduite à l'étape (9), la résine peut être réutilisée pour une nouvelle phase de purification du hafnium. Suivant une modalité préférée, la résine est re-conditionnée par la solution d'acide, ce qui permet d'éliminer l'eau ou solution aqueuse équivalente et de mettre la résine dans des conditions optimales pour un nouveau cycle de séparation/purification.

Avant ce re-conditionnement, on peut procéder au préalable à l'élimination de l'eau ou solution aqueuse équivalente par gravité (purge) ou par chasse au moyen d'air ou de gaz.

Quoique cela ne soit pas préféré, l'on peut se passer du conditionnement de la résine à l'étape (5). Dans ce

cas, avant ré-utilisation de la résine, on peut éventuellement éliminer l'eau ou solution aqueuse équivalente issue de l'étape (9) par gravité (purge) ou par chasse au moyen d'air ou de gaz.

La partie du procédé correspondant aux étapes (5) et suivantes où la résine est utilisée est remarquable en ce sens que les échanges d'ions et les décrochages/lavages sont effectués sans avoir recours à des milieux alcalins. Le procédé de l'invention se révèle avantageux pour l'intégrité et la conservation de la résine, en ce que la résine n'est pas exposée à des changements de pH acide à pH alcalin.

Dans les conditions de fonctionnement des étapes (5) et suivantes, la température n'est pas un paramètre critique et l'on peut donc avantageusement travailler à une température comprise entre 0 et 40°C, de préférence entre 15 et 25° C.

Un autre avantage de l'invention est que le procédé n'est pas sensible à la présence des ions que l'on trouve naturellement dans l'eau (alcalin, alcalino-terreux).

Dans une installation industrielle de purification du zirconium, on prévoit, selon une modalité préférée, d'installer plusieurs colonnes ou analogues disposées en parallèle et alimentées l'une après l'autre, de manière a disposer toujours d'une colonne ou analogue prête à l'emploi, de préférence conditionnée ou re-conditionnée, prête à recevoir la solution à traiter résultant de l'étape (5). De la sorte, il est possible d'opérer une purification du hafnium en continu à partir de la solution issue de l'installation industrielle de purification du zirconium (étapes (1) à (4)). Les opérations de purification du hafnium, de nettoyage, e.g. de rinçage à la solution acide, de décrochage à la solution aqueuse et de re-conditionnement de la résine sont menées comme décrit supra.

L'installation employée aux étapes (5) et suivantes peut fonctionner par gravité, mais on préfère pousser les solutions au travers des colonnes ou analogues, et de manière plus préférée, les colonnes ou analogues sont alimentées par le bas et les solutions sont amenées à circuler de bas en haut.

Les étapes (5) et suivantes nécessitent un outillage réduit, à savoir une ou plusieurs colonne(s) ou dispositif(s) analogue(s) et pompe(s) d'injection et/ou d'extraction.

Le volume de résine, les dimensions des colonnes ou dispositif(s) analogue(s), la granulométrie des particules de résine, leur nature et le débit des solutions sont des paramètres de fonctionnement qui permettent à l'homme du métier d'optimiser une installation en fonction des quantités de métal à traiter.

Les composés purs du zirconium ou du hafnium obtenus se présentent sous la forme de solutions d'oxychlorures $ZrOCl_2$ et $HfOCl_2$. Les méthodes pour obtenir le zirconium métal ou le hafnium métal, à partir de ces oxychlorures, existent et sont connues de l'homme du métier. Les oxychlorures peuvent ainsi être transformés en hydroxydes ($Zr(OH)_4$ ou $Hf(OH)_4$), déshydratés et calcinés en $ZrO_2$ et $HfO_2$, puis carbochlorés et réduits par le procédé Kroll permettant de récupérer Zr et Hf métal (Nouveau Traité de Chimie minérale, Paul Pascal, Tome IX, p 254-269). Suivant une autre méthode, on procède à l'évaporation de la solution d'oxychlorures, puis à la carbochloration et à la réduction en métal.

La présente invention a aussi pour objet l'utilisation de ce procédé pour la production de hafnium métal ayant une pureté correspondant à une teneur en Zr inférieure ou égale à 100 ppm, de préférence inférieure ou égale à 50, 30 et 20 ppm molaire par rapport à Hf.

Elle a également pour objet l'utilisation de ce procédé pour la production de zirconium métal ayant une pureté correspondant à une teneur en Hf métal inférieure ou égale à 250, 50, 40, 25 ou 10 pmm molaire exprimé par rapport à Zr+Hf.

Elle a encore pour objet l'utilisation de ce procédé pour la production de zirconium métal ayant une pureté correspondant à une teneur en Hf métal inférieure ou égale à 250, 50, 40, 25 ou 10 ppm molaire exprimé par rapport à Zr+Hf, et de hafnium métal ayant une pureté correspondant à une teneur en Zr inférieure ou égale à 100 ppm, de préférence inférieure ou égale à 50, 30 et 20 ppm mole par rapport à Hf.

L'invention va être maintenant décrite plus en détail, à l'aide des exemples et modes de réalisation décrits ci-après, présentés à titre d'exemples non limitatifs, et se référant au dessin annexé, dans lequel :

- la figure 1 présente, sous forme de graphe, les résultats d'analyse par ICP-AES des fractions éluées lors d'un processus de séparation d'un mélange Zr/Hf 70/30 molaire sur résine Dowex®1X8, avec les volumes de colonne analysés en abcisse, et les concentrations en Zr métal ou en Hf métal, en ordonnées ;
- la figure 2 présente, sous forme de graphe, les résultats d'analyse par ICP-AES des fractions éluées lors d'un processus de séparation d'un mélange Zr/Hf 40/60 molaire sur résine Dowex®1X8, avec les volumes de colonne analysés en abcisse, et les concentrations en Zr métal ou en Hf métal, en ordonnées ;
- la figure 3 présente, sous forme de graphe, les résultats d'analyse par ICP-AES des fractions éluées lors d'un processus de séparation d'un mélange Zr/Hf 70/30 molaire sur résine Reillex®HPQ, avec les volumes de colonne analysés en abcisse, et les concentrations en Zr métal ou en Hf métal, en ordonnées ;
- la figure 4 présente, sous forme de graphe, les résultats d'analyse par ICP-AES des fractions éluées lors d'un processus de séparation d'un mélange Zr/Hf 70/30 molaire sur résine Reillex® 402 PVP, avec les volumes de colonne analysés en abcisse, et les concentrations en Zr métal ou en Hf métal, en ordonnées ;
- la figure 5 est un diagramme simplifié du procédé de séparation du hafnium, après l'étape (4) ;

- la figure 6 est un schéma d'une installation de séparation Zr/Hf ;
- la figure 7 présente, sous forme de graphe, les résultats d'analyse par ICP-AES des fractions éluées lors d'un processus de séparation d'un mélange Zr/Hf 0,05/99,95 molaire sur résine Amberjet® 4200, avec les volumes de colonne analysés en abcisse, et les concentrations en Zr métal ou en Hf métal, en ordonnées.

## 1. Partie expérimentale

### 1.1. Produits organiques

#### 1.1.1. Source de zirconium et de hafnium

Les études de séparation zirconium/hafnium ont été pour une part réalisées à partir de tétrachlorures de zirconium et de hafnium obtenus après carbochloration (rapport en poids Zr/Hf 97,5/2,5), puis distillation extractive.

La figure 6 schématise l'appareillage dans lequel est effectuée la distillation extractive conduisant à la séparation de $ZrCl_4$ et de $HfCl_4$, suivant l'enseignement de FR-A-2 250 707 et FR-A-2 629 360.

L'installation comporte un moyen 1 d'alimentation d'une colonne de distillation 2 en vapeurs de tétrachlorure de zirconium contenant du tétrachlorure de hafnium (température comprise entre 430 et 550°C). Une pompe 7 assure la circulation du solvant d'extraction selon l'invention de haut en bas dans la colonne de distillation, à contre-courant des vapeurs de tétrachlorures de zirconium et de hafnium. Ce solvant parcourt en circuit fermé l'absorbeur 8, la colonne 2, le bouilleur 3, la colonne de stripping 5 et le réservoir 6 d'où il est renvoyé à nouveau par la pompe 7 en direction de l'absorbeur 8.

Le solvant utilisé est un complexe chloroaluminate de potassium $KAlCl_4$ (mélange KCl, $AlCl_3$), très peu volatil.

Les vapeurs enrichies en tétrachlorure de hafnium au cours de leur ascension dans la colonne 2 par échange avec le solvant circulant à contre-courant, sortent de la colonne 2 à sa partie supérieure, puis traversent l'absorbeur 8 dans lequel elles saturent le solvant. Cet appareil est refroidi au moyen d'un circuit thermostatique qui régule sa température entre 300 et 350°C. Une fraction de ces vapeurs, non retenue par le solvant, se dégage de l'absorbeur 8. Cette fraction, pouvant contenir un résidu d'$AlCl_3$, passe à travers un dispositif 4 de piégeage de l'aluminium tel que décrit par exemple dans FR-A-2 543 162, et vient se condenser dans le condenseur 13 qui est relié à l'atmosphère par une tubulure d'évent 14, et comporte un moyen de soutirage 12 qui permet de soutirer le condensat enrichi en tétrachlorure de hafnium.

A la base de la colonne 2, le bouilleur 3, dont la température est réglée à 500° C environ, reçoit la solution de tétrachlorure de zirconium dans le solvant qui s'est appauvri en tétrachlorure de hafnium au cours de sa descente à travers la colonne 2. Cette solution passe du bouilleur 3 dans la colonne de stripping ou d'épuisement 5. Dans la colonne de stripping 5, le tétrachlorure de zirconium appauvri en tétrachlorure de hafnium est extrait du solvant au moyen d'un courant d'azote, circulant de bas en haut dans cette colonne, à contre-courant du solvant, et entraînant à la partie supérieure les vapeurs de tétrachlorure de zirconium qui sont ainsi extraites du solvant. Ces vapeurs, pouvant contenir un résidu d'$AlCl_3$, sont entraînées par le courant d'azote à travers un dispositif 11 de piégeage de l'aluminium tel que décrit par exemple dans FR-A-2 543 162. A la sortie de ce dispositif 11, les vapeurs de tétrachlorure de zirconium sont entraînées dans le condenseur 9 et le tétrachlorure de zirconium purifié est soutiré en 10.

Cet appareillage permet d'obtenir une poudre enrichie en hafnium (sous forme de tétrachlorure), selon des rapports Zr/Hf variant selon les conditions opératoires et la configuration exacte de l'installation. Pour les besoins de l'expérience, il a été produit une poudre ayant un rapport Zr/Hf de 70/30 molaire.

#### 1.1.2. Résines

Les résines utilisées pour l'extraction solide-liquide du zirconium et de l'hafnium sont des résines de type ammonium quaternaires et des azines:

* La résine Dowex® 1X8 est un chlorure d'ammonium triméthylé greffé sur une matrice styrène-DVB, avec un taux de fonctionnalisation de 3,5 meq/g de résine sèche. La résine Dowex® 1 X8 est fournie par Aldrich. Granulométrie : 150-300 micromètres.

* La résine Reillex™ HPQ est un chlorure de N-méthyl-poly-(4-vinylpyridine). Sa capacité maximale est de 4meq/g de résine sèche. Sa teneur en eau est de 67-75%. Granulométrie : 250-595 micromètres.

* La résine Reillex™ PVP 402 est une polyvinylpyridine. Sa capacité maximale est de 5meq/g de résine sèche. Sa teneur en eau est de 50-60%.

* La résine Amberjet® 4200.

Les résines Reillex™ HPQ et Reillex™ HPQ proviennent de la société Reilly.

Structures des résines utilisées :

a-Dowex®1X8,

b-Reillex™ HPQ,

c-Reillex™ PVP 402)

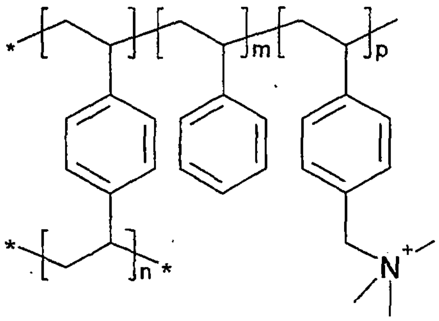

- a -

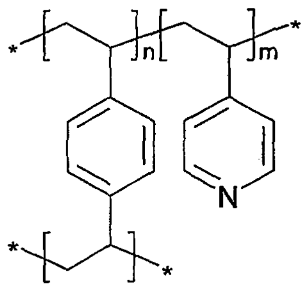

- b -

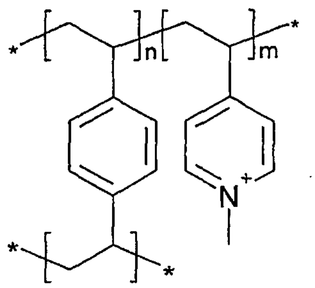

- c -

1.1.3. <u>Solvant</u>

acide chlorhydrique 37% en poids dans l'eau

1.2. <u>Analyses par ICP-AES</u>

Les phases aqueuses sont analysées par ICP-AES (inductively Coupled Plasma - Atomic Emission Spectroscopy). Les mesures sont réalisées sur un spectrophotomètre Spectro D de Spectro. Le zirconium est mesuré à une longueur d'onde de 339,198 nm et le hafnium à 282,022 nm. L'incertitude sur les mesures est de ±0,2mg/L.

1.3. <u>Définitions des constantes utilisées en extraction solide-liquide</u>

Ci : concentration initiale en métal (mg/L)

Cf : concentration finale en métal (mg/L)

$Vol_{aq}$ : volume de la phase aqueuse au contact de la résine

m : masse de résine

E : extraction (%)

D : coefficient de distribution (mL/g)

D(Zr) : coefficient de distribution du zirconium (mL/g).

D(Hf) : coefficient de distribution de l'hafnium (mL/g).

Le pourcentage d'extraction se définit selon la formule suivante :

$$E = \frac{(Ci - Cf)}{Ci} \times 100$$

L'évaluation des propriétés d'extraction des complexants utilisés vis-à-vis du zirconium et du hafnium s'effectue en comparant les coefficients de distribution. Cette constante est déterminée expérimentalement par le dosage de la phase aqueuse avant et - après extraction.

$$D = \left[\frac{Ci\text{-}Cf}{Cf}\right] X \left[\frac{Vol_{aq}}{m}\right]$$

La sélectivité S(Zr/Hf) en zirconium par rapport au hafnium est définie comme le rapport des coefficients de distribution D(Zr) et D(Hf).

$$S(Zr/Hf) = \frac{D(Zr)}{D(Hf)}$$

1.4. Expériences

1.4.1. Préparation de la phase aqueuse

Des solutions aqueuses sont préparées par agitation magnétique, en dissolvant la poudre de tétrachlorures de zirconium et de hafnium dans des solutions d'acide chlorhydrique de manière à obtenir des concentrations variant de 0 à 12 mol/L.

1.4.2. Mode opératoire

La séparation du zirconium et du hafnium s'effectue par extraction solide-liquide avec des résines. Les flacons sont agités à l'aide d'un agitateur mécanique horizontal de type Vibramax® 100 (Bioblock scientific) pendant 10 minutes. Les expériences sont réalisées à température ambiante. Les phases aqueuses sont ensuite dosées par ICP-AES. Les pourcentages d'extraction et les coefficients de distribution du zirconium et du hafnium peuvent être déterminés. La réextraction est réalisée avec de l'eau distillée. Le dosage par ICP-AES de cette phase aqueuse permet de calculer le pourcentage de réextraction pour Zr et Hf. Ensuite, les phases aqueuses sont agitées avec l'extractant (résine) pour effectuer l'extraction. La concentration en HCl est contrôlée dans toutes les solutions par dosage acido-basique de la phase aqueuse par de la soude 0,5 mol/L en présence de phénolphtaléïne.

1.5. Résultats

1.5.1. Effet de la concentration en HCl sur la séparation zirconium/hafnium 70/30 molaire avec la résine Dowex®1X8

Tableau 1 : Effet de la concentration de HCl sur la séparation Zr/Hf avec la résine Dowex ®1X8 ;

[Zr]=2500mg/L; résine Dowex®1X8: m=1g; $vol_{aq}$=10mL ; agitation=10min; température ambiante.

| [HCl] mol/L | extraction Zr (%) | extraction Hf (%) | D (Zr) (mL/g) | D(Hf) (mL/g) | S (Zr/Hf) |
|---|---|---|---|---|---|
| $H_2O$ | 0,62 | 0,41 | 0,06 | 0,04 | ND |
| 5 | 1,97 | 1,32 | 0,20 | 0,13 | ND |
| 7 | 1,01 | 0,89 | 0,10 | 0,09 | ND |
| 8,5 | 6,99 | 1,41 | 0,75 | 0,14 | 5,36 |
| 9,5 | 31,96 | 8,49 | 4,70 | 0,93 | 5,05 |
| 12 | 44,46 | 29,87 | 8,00 | 4,26 | 1,88 |

ND : non déterminé car le pourcentage d'extraction est trop faible.

Lorsque la concentration en HCl augmente, une augmentation des coefficients de distribution est observée (tableau 1).

L'optimal est obtenu pour la concentration en HCl de 9,5 mol/l: différentiel important entre D(Zr) et D(Hf) et

sélectivité S(Zr/Hf) élevée.

1.5.2. Effet de la concentration en HCl sur la séparation zirconium/hafnium 70/30 molaire avec la résine Reillex™ HPQ

Tableau 2 : Effet de la concentration en HCl sur la séparation Zr/Hf avec la résine Reillex ™ HPQ

| [Zr]=2500mg/L ;résine Reillex™ HPQ:m=1g;$vol_{aq}$=10mL ; agitation=10min ; température ambiante. | | | | | |
|---|---|---|---|---|---|
| [HCl] mol/L | extraction Zr (%) | extraction Hf (%) | D (Zr) (mL/g) | D(Hf) (mL/g) | S (Zr/Hf) |
| $H_2O$* | 17,78 | 19,32 | 0,42 | 0,47 | 0,89 |
| 2,5* | 19,60 | 19,15 | 0,46 | 0,45 | 1,02 |
| 5* | 19,03 | 19,71 | 0,46 | 0,48 | 0,96 |
| 7 | 8,43 | 4,86 | 0,88 | 0,49 | 1,79 |
| 8,5 | 49,02 | 11,95 | 9,28 | 1,31 | 7,08 |
| 9,5 | 73,59 | 41,82 | 27,43 | 7,08 | 3,87 |
| 12 | 95,53 | 90,94 | 210,01 | 98,67 | 2,13 |

Lorsque la concentration en HCl augmente, une augmentation des coefficients de distribution est observée (tableau 2). A noter que les expériences aux concentrations en HCl comprises entre 0 et 5mol/L ont été réalisées avec 5 g de résines ceci afin d'observer des meilleures extractions et ainsi avoir de meilleures précisions sur les coefficients de distribution et sur les sélectivité. L'optimum a été obtenu pour les concentrations en HCl 8,5 et 9,5mol/L.

1.5.3. Effet de la concentration en HCl sur la séparation zirconium/hafnium 70/30 molaire avec la résine Reillex™ 402 PVP

Tableau 3: Effet de la concentration en HCl sur la séparation Zr/Hf avec la résine Reillex™ PVP 402

| [Zr]=2500mg/L ;résine Reillex™ 402 PVP:m=1g;$vol_{aq}$=10mL ; agitation=10min ; température ambiante. | | | | | |
|---|---|---|---|---|---|
| [HCl] mol/L | extraction Zr (%) | extraction Hf(%) | D (Zr) (mL/g) | D(Hf) (mL/g) | S (Zr/Hf) |
| $H_2O$ | 5,44 | 5,42 | 0,54 | 0,53 | 1,02 |
| 2,5 | 4,23 | 3,47 | 0,41 | 0,33 | 1,24 |
| 5 | 5,95 | 5,68 | 0,60 | 0,57 | 1,05 |
| 7 | 5,59 | 3,63 | 0,57 | 0,36 | 1,58 |
| 8,5 | 10,32 | 3,97 | 1,08 | 0,39 | 2,77 |
| 9,5 | 70,25 | 21,31 | 22,1 | 2,54 | 8,70 |
| 12 | 99,29 | 97,78 | 1280 | 405,1 | 3,16 |

Lorsque la concentration en HCl augmente, une augmentation des coefficients de distribution du zirconium et du hafnium est observée (tableau 3). L'optimum a été obtenu pour la concentration en HCl 9,5mol/L.

1.5.4 Etude de la réextraction du zirconium et du hafnium avec la résine Reillex™ HPQ

Une étude de la réextraction avec de l'eau distillée a été réalisée.

Tableau 4: Réextraction de Zr et de Hf de la résine Reillex™ HPQ avec de l'eau distillée

| [Zr]=2500mg/L ; [HCl]=7mol/L ; $vol_{aq}$=10mL ; agitation=10min ; température ambiante. | | | | |
|---|---|---|---|---|
| Reillex™ HPQ (g) | extraction Zr (%) | extraction Hf (%) | réextraction Zr (%) | réextraction Hf (%) |
| 0,045 | 12,77 | 0,97 | quantitative | quantitative |
| 0,090 | 22,96 | 3,08 | quantitative | quantitative |
| 0,225 | 51,61 | 12,06 | quantitative | quantitative |
| 0,450 | 76,30 | 28,18 | quantitative | quantitative |

Le zirconium et l'hafnium sont bien réextraits quantitativement avec un volume d'eau distillée.

1.5.5. Influence de la qualité de l'eau sur la séparation zirconium/hafnium

La séparation Zr/Hf par extraction solide-liquide a été étudiée pour des solutions préparées à partir d'eau bidistillée et d'eau industrielle (présence d'alcalins et alcalino-terreux). Mélange $ZrCl_4/HfCl_4$ de ratio 70/30 molaire dans l'acide chlorhydrique de concentration 9,5mol/L.

Tableau 5: Séparation Zr/Hf avec résine Dowex ®1X8

| [Zr]=2500mg/L ; masse de résine 1 g; [HCl]=9,5mol/L ; $vol_{aq}$=20mL ; agitation=10min ; température ambiante. | | | | | |
|---|---|---|---|---|---|
| Type d'eau | Extraction Zr (%) | Extraction Hf (%) | D(Zr) (mL/g) | D(Hf) (mL/g) | S(Zr/Hf) |
| Eau distillée | 85,9 | 49,0 | 121,6 | 19,2 | 6,3 |
| Eau naturelle | 85,0 | 48,5 | 113,2 | 18,9 | 6,0 |

Il n'y a pas de différences entre les résultats obtenus avec de l'eau distillée et ceux obtenus avec de l'eau naturelle (tableaux 5, 6), ce qui montre que le procédé n'est pas sensible à la présence des ions présents naturellement dans l'eau. La réextraction est quantitative avec un volume d'eau.

**2. Exemple de séparation Zr/Hf à l'aide des résines en colonne**

2.1 Séparation Zr/Hf avec une colonne Dowex®1X8

2.1.1. A partir d'un mélange Zr/Hf (70/30 molaire)

80ml résine Dowex® 1 X8 sont placés dans une colonne. Puis, la résine est conditionnée dans de l'acide chlorhydrique 9,5mol/L (5 volumes).

De la poudre $ZrCl_4/HfCl_4$ (70/30 molaire) est dissoute dans une solution acide de HCl [9,5mol/L] pour atteindre une concentration de 10g/L exprimée en poudre de $ZrCl_4/HfCl_4$. On fait passer cette solution dans la résine. Lorsque la solution acide de Zr/Hf commence à être éluée, des échantillons sont prélevés en sortie de colonne et analysés (figure 1).

Comme on peut le voir à la figure 1, le hafnium est d'abord élué. L'élution de zirconium ne débute que vers le 10ème volume, si bien que du hafnium fortement purifié peut être récupéré entre les 5ème et 10èmevolumes. La pureté en hafnium atteint 99,87 %.

La colonne de résine est ensuite lavée (21ème volume) avec de l'acide chlorhydrique [9,5mol/L] pour éliminer les traces de métaux restées dans les interstices de la résine. On récupère une fraction ou partie intermédiaire comprenant des composés du zirconium et des composés du hafnium en proportion Zr/Hf de 40/60 molaire.

On effectue ensuite un traitement de la résine à l'eau distillée (25ème volume), ce qui entraîne le décrochage des composés métalliques accrochés à la résine. Ce décrochage correspond au pic observé sur la figure 1 vers le 25ème volume. Le rapport moyen Zr/Hf est de 85/15 molaire dans la phase aqueuse.

2.1.2. Purification du hafnium à partir d'un mélange Zr/Hf(40/60)

La partie intermédiaire de la précédente colonne (volumes 20 à 24), de proportion Zr/Hf (40/60 molaire), est éluée sur une deuxième colonne contenant 40mL de résine Dowex® 1X8 conditionnée avec de l'acide chlorhydrique 9,5mol/L.

La figure 2 montre que l'élution maximale de hafnium est atteint vers le 11ème volume. Le hafnium peut être récupéré avec une pureté de 99,87%.

2.1.3. Séparation Zr/Hf avec une colonne Reillex™ HPQ

115mL de résine Reillex™ HPQ sont placés dans une colonne, puis la résine est conditionnée dans de l'acide chlorhydrique 9,5mol/L (5 volumes).

De la poudre $ZrCl_4/HfCl_4$ (70/30 molaire) est dissoute dans une solution acide HCl [9,5mol/L] pour atteindre une concentration de 10g/L exprimée en poudre de $ZrCl_4/HfCl_4$. On fait passer cette solution dans la résine. Dès que cette solution acide commence à être éluée, des échantillons sont prélevés en sortie de colonne.

La figure 3 montre le profil d'élution avec un pic dé hafnium vers le 6ème volume. Le hafnium peut être récupéré avec une pureté moyenne de 91%. Le zirconium élue ensuite.

La colonne de résine est ensuite lavée avec de l'acide chlorhydrique [9,5mol/L] pour éliminer les traces de métaux restées dans les interstices de la résine.

On effectue ensuite le décrochage avec de l'eau. 2 volumes sont nécessaires pour récupérer tout le zirconium fixé sur la résine. Le zirconium est obtenu avec une pureté de 93,7%.

2.1.4. <u>Séparation Zr/Hf avec une colonne Reillex™ PVP 402</u>

80mL de résine Reillex™ PVP 402 sont placés dans une colonne, puis la résine est conditionnée dans de l'acide chlorhydrique 9,5mol/L (5 volumes).

De la poudre $ZrCl_4/HfCl_4$ (70/30 molaire) est dissoute dans une solution acide HCl [9,5mol/L] pour atteindre une concentration de 10g/L exprimée en poudre de $ZrCl_4/HfCl_4$. On fait passer cette solution dans la résine. Dès que cette solution acide commence à être éluée, des échantillons sont prélevés en sortie de colonne.

A la figure 4, on voit que le hafnium purifié peut être récupéré à partir du 10ème volume. Le hafnium peut être récupéré avec une pureté de 99,95%.

La colonne de résine est ensuite lavée avec de l'acide chlorhydrique [9,5mol/L] pour éliminer les traces de métaux restées dans les interstices de la résine.

On récupère ensuite le zirconium accroché sur la résine par gradient de concentration en HCl. Un volume de HCl 7mol/L a été élué et a permis de recueillir du zirconium pur à 94%. Ensuite, avec un volume d'eau distillée, le zirconium récupéré est pur à 97,5%. Avec cette colonne de résine Reillex™ PVP, le rapport moyen Zr/Hf est de 96/4 molaire.

## 3. <u>Description d'une installation fonctionnant selon le principe de l'invention</u>

La figure 5 présente un diagramme simplifié d'un procédé selon l'invention, permettant de purifier le hafnium et le zirconium. Le mélange de tétrachlorures de zirconium et de hafnium dans un rapport 70/30 molaire, soutiré en 15 sur la figure 10, est dissout dans de l'acide chlorhydrique 9,5N. Cette solution est introduite dans la colonne, contenant une résine selon l'invention, pré-conditionnée avec HCl. Le hafnium n'est pas retenu par la résine et est donc récupéré en sortie de colonne (étape 1 sur la figure). Une fois la résine saturée en zirconium, elle est lavée par HCl (étape 2 sur la figure), et le produit de lavage est récupéré pour être ensuite retraité comme à l'étape 1. L'étape 3 sur la figure représente le lavage à l'eau, qui permet de décrocher le zirconium et de le récupérer. La colonne est alors régénérée (étape 4 à la figure) et peut être réutilisée, après un nouveau conditionnement avec HCl.

## 4. <u>Séparation à partir d'un mélange Zr/Hf 0,05/99,95 molaire</u>

La poudre de tétrachlorure de hafnium est dissoute dans une solution acide chlorhydrique pour obtenir un concentration en Hf de 4,5 g/L et une concentration en acide chlorhydrique de 9,5 mol/L. 25ML de résine Amberjet 4200® sont placés dans une colonne. La résine est conditionnée avec de l'acide chlorhydrique 9,5 mol/L. La résine Amberjet 4200® est saturée avec la solution aqueuse des composés de Zr et Hf. Dès que cette solution commence à être éluée, des échantillons sont prélevés en sortie de colonne. Le profil de Hf et Zr est représenté sur la figure 6.

Le Hf peut être récupéré avec une pureté de 99,99 %.

Il doit être bien compris que l'invention définie par les revendications annexées n'est pas limitée aux modes de réalisation particuliers indiqués dans la description ci-dessus, mais en englobe les variantes qui ne sortent ni du cadre ni de l'esprit de la présente invention.

## Revendications

1. Procédé pour la séparation du hafnium et du zirconium, à partir d'un mélange contenant $ZrCl_4$ et $HfCl_4$, comprenant les étapes suivantes :

    (1) introduire le mélange de $ZrCl_4$ et $HfCl_4$ sous forme vapeur dans une colonne de distillation extractive en continu ;
    (2) procéder à l'absorption sélective des vapeurs de $ZrCl_4$ et $HfCl_4$ par un solvant d'extraction circulant à contre-courant desdites vapeurs dans la colonne de distillation;
    (3) soutirer un mélange liquide ou gazeux de $ZrCl_4$ et $HfCl_4$ enrichi en $ZrCl_4$ ;
    (4) soutirer un mélange liquide ou gazeux de $ZrCl_4$ et $HfCl_4$ enrichi en $HfCl_4$; **caractérisé en ce qu'**il comprend

en outre les étapes suivantes :
(5) hydrolyser le mélange obtenu à l'étape (4) dans une solution aqueuse d'acide inorganique fort, de manière à former une solution aqueuse ayant de 7 à 12 moles d'acide par litre ;
(6) faire passer la solution obtenue à l'étape (5) dans une résine échangeuse d'anions ;
(7) laisser éluer et récupérer une fraction enrichie en hafnium.

**2.** Procédé selon la revendication 1, dans lequel on part d'un mélange solide de $ZrCl_4$ et $HfCl_4$, que l'on sublime, et l'on introduit les vapeurs de $ZrCl_4$ et $HfCl_4$ dans la colonne de distillation.

**3.** Procédé selon la revendication 1, dans lequel on part d'une solution de $ZrCl_4$ et $HfCl_4$, que l'on évapore, et l'on introduit les vapeurs de $ZrCl_4$ et $HfCl_4$ dans la colonne de distillation.

**4.** Procédé selon l'une quelconque des revendications précédentes, dans lequel le solvant comprend $KAlCl_4$ ou ($AlCl_3$, KCl).

**5.** Procédé selon l'une quelconque des revendications 1 à 4, dans lequel on soutire à l'étape (3) un mélange liquide de $ZrCl_4$ et $HfCl_4$ enrichi en $ZrCl_4$ en pied de colonne, et à l'étape (4) un mélange gazeux de $ZrCl_4$ et $HfCl_4$ enrichi en $HfCl_4$ en tête de colonne.

**6.** Procédé selon l'une quelconque des revendications 1 à 4, dans lequel on soutire à L'étape (3) un mélange gazeux de $ZrCl_4$ et $HfCl_4$ enrichi en $ZrCl_4$ en tête de colonne, et à l'étape (4) un mélange liquide de $ZrCl_4$ et $HfCl_4$ enrichi en $HfCl_4$ en pied de colonne.

**7.** Procédé selon l'une quelconque des revendications précédentes, dans lequel le mélange liquide ou gazeux de $ZrCl_4$ et $HfCl_4$ enrichi en $ZrCl_4$ et/ou en $HfCl_4$ est soumis à un traitement comprenant un passage dans un condenseur pour produire un mélange pulvérulent.

**8.** Procédé selon la revendication précédente, dans lequel le mélange pulvérulent de $ZrCl_4$ et $HfCl_4$ enrichi en $HfCl_4$ est dissout à l'étape (5) dans la solution aqueuse d'acide inorganique fort.

**9.** Procédé selon la revendication 5, dans lequel le mélange gazeux de $ZrCl_4$ et $HfCl_4$ enrichi en $HfCl_4$ est mis à barbotter à l'étape (5) dans la solution aqueuse d'acide inorganique fort.

**10.** Procédé selon l'une quelconque des revendications précédentes, dans lequel, à l'étape (6), la résine est conditionnée avec une solution aqueuse d'acide inorganique fort ayant de 7 à 12 moles d'acide par litre.

**11.** Procédé selon l'une quelconque des revendications précédentes, dans lequel l'acide inorganique fort est choisi parmi HCl et $H_2SO_4$.

**12.** Procédé selon la revendication 11, dans lequel l'acide inorganique fort est HCl.

**13.** Procédé selon l'une quelconque des revendications précédentes, dans lequel la solution aqueuse acide contient de 7,5 à 9,5 moles d'acide par litre.

**14.** Procédé selon l'une quelconque des revendications précédentes, dans lequel la résine échangeuse d'anions porte des groupements amine, ammonium ou azine.

**15.** Procédé selon l'une quelconque des revendications précédentes, dans lequel la résine échangeuse d'anions est sous forme chlorure.

**16.** Procédé selon l'une quelconque des revendications précédentes, dans lequel, à l'étape (7), on récupère une ou plusieurs fractions riches en hafnium.

**17.** Procédé selon la revendication 16, dans lequel on récupère une fraction riche en hafnium, comportant une teneur en zirconium inférieure ou égale à 100 ppm mole exprimé par rapport à Hf.

**18.** Procédé selon la revendication 17, dans lequel on récupère une fraction riche en hafnium, comportant une teneur en zirconium inférieure ou égale à 50 ppm mole exprimé par rapport à Hf.

**19.** Procédé selon la revendication 18, dans lequel on récupère une fraction riche en hafnium, comportant une teneur en zirconium inférieure ou égale à 30 ppm mole exprimé par rapport à Hf.

**20.** Procédé selon la revendication 19, dans lequel on récupère une fraction riche en hafnium, comportant une teneur en zirconium inférieure ou égale à 20 ppm mole exprimé par rapport à Hf.

**21.** Procédé selon l'une quelconque des revendications précédentes, dans lequel après l'étape (7), on élimine le zirconium et le hafnium contenu dans la résine en interstitiel, sans y être accroché par interaction ionique (étape (8)).

**22.** Procédé selon la revendication 21, dans lequel à l'étape (8) l'on procède à un rinçage de la résine à l'aide d'une solution d'acide fort inorganique ayant de 7 à 12 moles d'acide par litre, et ayant un nombre de moles d'acide par litre sensiblement identique ou supérieur à la solution d'alimentation formée à l'étape (5).

**23.** Procédé selon la revendication 21, dans lequel à l'étape (8) l'on vide la résine de son contenu liquide.

**24.** Procédé selon la revendication 23, dans lequel on rince ensuite la résine à l'aide d'une solution d'acide fort inorganique ayant de 7 à 12 moles d'acide par litre, et ayant un nombre de moles d'acide par litre sensiblement identique ou supérieur à la solution d'alimentation formée à l'étape (5).

**25.** Procédé selon l'une quelconque des revendications précédentes, dans lequel, après l'étape (8), on lave la résine à l'aide d'une solution aqueuse ayant une concentration en acide comprise entre 0 et 7 moles d'acide par litre, inférieure à celle utilisée aux étapes précédentes, et l'on récupère une fraction enrichie en zirconium.

**26.** Procédé selon la revendication 25, dans lequel on utilise de l'eau.

**27.** Procédé selon la revendication 25, dans lequel on utilise successivement au moins deux solutions aqueuses de concentrations décroissantes en acide.

**28.** Procédé selon la revendication 27, dans lequel on utilise de l'eau en dernier lieu.

**29.** Procédé selon la revendication 22, 24 ou 27, dans lequel l'acide est HCl.

## Patentansprüche

**1.** Verfahren zur Trennung von Hafnium und Zirconium aus einer Mischung, die $ZrCl_4$ und $HfCl_4$ enthält, die folgenden Schritte umfassend:

(1) Einführen der Mischung aus $ZrCl_4$ und $HfCl_4$ in Form von Dampf in eine kontinuierliche extraktive Destillationskolonne;
(2) Durchführen einer selektiven Absorption der $ZrCl_4$- und $HfCl_4$-Dämpfe durch ein Extraktionslösungsmittel, das im Gegenstrom zu den Dämpfen in der Destillationskolonne zirkuliert;
(3) Entziehen einer flüssigen oder gasförmigen mit $ZrCl_4$ angereicherten Mischung aus $ZrCl_4$ und $HfCl_4$;
(4) Entziehen einer flüssigen oder gasförmigen mit $HfCl_4$ angereicherten Mischung aus $ZrCl_4$ und $HfCl_4$;
**dadurch gekennzeichnet, dass** es außerdem die folgenden Schritte umfasst:
(5) Hydrolysieren der in Schritt (4) erhaltenen Mischung in einer wässrigen Lösung einer starken anorganischen Säure, um eine wässrige Lösung zu bilden, die 7 bis 12 Mol Säure pro Liter aufweist;
(6) Überführen der im Schritt (5) erhaltenen Lösung in ein Anionenaustauscherharz;
(7) Eluierenlassen und Wiedergewinnen einer mit Hafnium angereicherten Fraktion.

**2.** Verfahren nach Anspruch 1, bei dem von einer festen Mischung aus $ZrCl_4$ und $HfCl_4$ ausgegangen wird, die sublimiert wird und die $ZrCl_4$- und $HfCl_4$-Dämpfe in die Destillationskolonne eingeführt werden.

**3.** Verfahren nach Anspruch 1, bei dem von einer Lösung aus $ZrCl_4$ und $HfCl_4$ ausgegangen wird, die verdampft wird und die $ZrCl_4$- und $HfCl_4$-Dämpfe in die Destillationskolonne eingeführt werden.

**4.** Verfahren nach einem beliebigen der vorhergehenden Ansprüche, bei dem das Lösungsmittel $KAlCl_4$ oder ($AlCl_3$, KCl) umfasst.

5. Verfahren nach einem beliebigen der Ansprüche 1 bis 4, bei dem im Schritt (3) eine flüssige mit $ZrCl_4$ angereicherte Mischung aus $ZrCl_4$ und $HfCl_4$ am Fuß der Kolonne und im Schritt (4) eine gasförmige mit $HfCl_4$ angereicherte Mischung aus $ZrCl_4$ und $HfCl_4$ am Kopf der Kolonne entzogen wird.

6. Verfahren nach einem beliebigen der Ansprüche 1 bis 4, bei dem bei Schritt (3) eine gasförmige mit $ZrCl_4$ angereicherte Mischung aus $ZrCl_4$ und $HfCl_4$ am Kopf der Kolonne und bei Schritt (4) eine flüssige mit $HfCl_4$ angereicherte Mischung aus $ZrCl_4$ und $HfCl_4$ am Fuß der Kolonne entzogen wird.

7. Verfahren nach einem beliebigen der vorhergehenden Ansprüche, bei dem die flüssige oder gasförmige mit $ZrCl_4$ und/oder $HfCl_4$ angereicherte Mischung aus $ZrCl_4$ und $HfCl_4$ einer Behandlung unterworfen wird, die den Übergang in einen Kondensor umfasst, um eine pulverförmige Mischung zu erzeugen.

8. Verfahren nach dem vorhergehenden Anspruch, bei dem die pulverförmige mit $HfCl_4$ angereicherte Mischung aus $ZrCl_4$ und $HfCl_4$ in dem Schritt (5) in der wässrigen Lösung der starken anorganischen Säure gelöst wird.

9. Verfahren nach Anspruch 5, bei dem die gasförmige mit $HfCl_4$ angereicherte Mischung aus $ZrCl_4$ und $HfCl_4$ bei Schritt (5) in die wässrige Lösung der starken anorganischen Säure eingeblasen wird.

10. Verfahren nach einem beliebigen der vorhergehenden Ansprüche, bei dem in Schritt (6) das Harz mit einer wässrigen Lösung einer starken anorganischen Säure, die 7 bis 12 Mol Säure pro Liter aufweist, konditioniert wird.

11. Verfahren nach einem beliebigen der vorhergehenden Ansprüche, bei dem die starke anorganische Säure aus HCl und $H_2SO_4$ ausgewählt wird.

12. Verfahren nach Anspruch 11, bei dem die starke anorganische Säure HCl ist.

13. Verfahren nach einem beliebigen der vorhergehenden Ansprüche, bei dem die wässrige Säurelösung 7,5 bis 9,5 Mol Säure pro Liter enthält.

14. Verfahren nach einem beliebigen der vorhergehenden Ansprüche, bei dem das Anionenaustauscherharz Amin-, Ammonium- oder Azingruppen trägt.

15. Verfahren nach einem beliebigen der vorhergehenden Ansprüche, bei dem das Anionenaustauscherharz in Form von Chlorid vorhanden ist.

16. Verfahren nach einem beliebigen der vorhergehenden Ansprüche, bei dem im Schritt (7) eine oder mehrere an Hafnium reiche Fraktionen wiedergewonnen werden.

17. Verfahren nach Anspruch 16, bei dem eine an Hafnium reiche Fraktion wiedergewonnen wird, die einen Gehalt an Zirconium kleiner oder gleich 100 ppm Mol, bezogen auf Hf aufweist.

18. Verfahren nach Anspruch 17, bei dem eine an Hafnium reiche Fraktion wiedergewonnen wird, die einen Gehalt an Zirconium kleiner oder gleich 50 ppm Mol, bezogen auf Hf aufweist.

19. Verfahren nach Anspruch 18, bei dem eine an Hafnium reiche Fraktion wiedergewonnen wird, die einen Gehalt an Zirconium kleiner oder gleich 30 ppm Mol, bezogen auf Hf aufweist.

20. Verfahren nach Anspruch 19, bei dem eine an Hafnium reiche Fraktion wiedergewonnen wird, die einen Gehalt an Zirconium kleiner oder gleich 20 ppm Mol, bezogen auf Hf aufweist.

21. Verfahren nach einem beliebigen der vorhergehenden Ansprüche, bei dem nach dem Schritt (7) das Zirconium und das Hafnium, das in dem Harz interstitiell enthalten ist, eliminiert werden, ohne sich durch ionische Wechselwirkung daran anzuhängen (Schritt (8)).

22. Verfahren nach Anspruch 21, bei dem im Schritt (8) eine Spülung des Harzes mit Hilfe einer Lösung einer starken anorganischen Säure mit 7 bis 12 Mol Säure pro Liter und mit einer im Wesentlichen identischen oder größeren Anzahl von Säuremolen pro Liter als die im Schritt (5) gebildete Versorgungslösung durchgeführt wird.

**23.** Verfahren nach Anspruch 21, bei dem bei Schritt (8) das Harz von seinem flüssigen Inhalt geleert wird.

**24.** Verfahren nach Anspruch 23, bei dem dann das Harz mit Hilfe einer Lösung einer starken anorganischen Säure gespült wird, die 7 bis 12 Mol Säure pro Liter aufweist und eine im Wesentlichen identische oder größere Anzahl von Säuremolen pro Liter als die bei Schritt 5 gebildete Versorgungslösung aufweist.

**25.** Verfahren nach einem beliebigen der vorhergehenden Ansprüche, bei dem nach dem Schritt (8) das Harz mit Hilfe einer wässrigen Lösung gewaschen wird, die eine Säurekonzentration zwischen 0 und 7 Mol Säure pro Liter, geringer als die, die bei den vorhergehenden Schritten verwendet wurde, aufweist, und eine mit Zirconium angereicherte Fraktion wiedergewonnen wird.

**26.** Verfahren nach Anspruch 25, bei dem Wasser verwendet wird.

**27.** Verfahren nach Anspruch 25, bei dem aufeinanderfolgend mindestens zwei wässrige Lösungen mit abnehmender Säurekonzentration verwendet werden.

**28.** Verfahren nach Anspruch 27, bei dem Wasser zuletzt verwendet wird.

**29.** Verfahren nach Anspruch 22, 24 oder 27, bei dem die Säure HCl ist.

## Claims

**1.** Process for the separation of hafnium and zirconium from a mixture containing $ZrCl_4$ and $HfCl_4$, comprising the following steps:

(1) introduction of the mixture of $ZrCl_4$ and $HfCl_4$ in vapour form into a continuous extractive distillation column;
(2) selective absorption of the $ZrCl_4$ and $HfCl_4$ vapours by an extraction solvent circulating in a counter-current to the stream of said vapours in the distillation column;
(3) drawing-off of a liquid or gaseous mixture of $ZrCl_4$ and $HfCl_4$ enriched with $ZrCl_4$;
(4) drawing-off of a liquid or gaseous mixture of $ZrCl_4$ and $HfCl_4$ enriched with $HfCl_4$;
the process being **characterized in that** it comprises further the following steps :
(5) hydrolysis of the mixture obtained in step (4) in an aqueous solution of strong inorganic acid so as to form an aqueous solution having from 7 to 12 mol of acid per litre;
(6) passing the solution obtained in step (5) into an anion-exchange resin; and
(7) eluting and recovering a fraction enriched with hafnium.

**2.** Process according to claim 1, wherein use is made of a solid mixture of $ZrCl_4$ and $HfCl_4$ as a starting material, the mixture is sublimated, and the $ZrCl_4$ and $HfCl_4$ vapours are introduced into the distillation column.

**3.** Process according to claim 1, wherein use is made a solution of $ZrCl_4$ and $HfCl_4$ as a starting material, the mixture is evaporated, and the $ZrCl_4$ and $HfCl_4$ vapours are introduced into the distillation column.

**4.** Process according to any one of the preceding claims, wherein the solvent comprises $KAlCl_4$ or ($AlCl_3$, KCl).

**5.** Process according to any one of claims 1 to 4, wherein, in step (3), a liquid mixture of $ZrCl_4$ and $HfCl_4$ enriched with $ZrCl_4$ is drawn off at the base of the column and, in step (4), a gaseous mixture of $ZrCl_4$ and $HfCl_4$ enriched with $HfCl_4$ is drawn off at the top of the column.

**6.** Process according to any one of claims 1 to 4, wherein, in step (3), a gaseous mixture of $ZrCl_4$ and $HfCl_4$ enriched with $ZrCl_4$ is drawn off at the top of the column and, in step (4), a liquid mixture of $ZrCl_4$ and $HfCl_4$ enriched with $HfCl_4$ is drawn off at the base of the column.

**7.** Process according to any one of the preceding claims, wherein the liquid or gaseous mixture of $ZrCl_4$ and $HfCl_4$ enriched with $ZrCl_4$ and/or with $HfCl_4$ is subjected to a treatment involving passing into a condenser in order to produce a powder mixture.

**8.** Process according to the preceding claim, wherein, in step (5), the powder mixture of $ZrCl_4$ and $HfCl_4$ enriched with

$HfCl_4$ is dissolved in the aqueous solution of strong inorganic acid.

**9.** Process according to claim 5, wherein, in step (5), the gaseous mixture of $ZrCl_4$ and $HfCl_4$ enriched with $HfCl_4$ is caused to bubble in the aqueous solution of strong inorganic acid.

**10.** Process according to any one of the preceding claims, wherein in step (6), the resin is conditioned with an aqueous solution of strong inorganic acid having 7 to 12 mol of acid per litre.

**11.** Process according to any one of the preceding claims, wherein the strong inorganic acid is selected from HCl and $H_2SO_4$.

**12.** Process according to claim 11, wherein the strong inorganic acid is HCl.

**13.** Process according to any one of the preceding claims, wherein the aqueous acid solution contains from 7.5 to 9.5 mol of acid per litre.

**14.** Process according to any one of the preceding claims, wherein the anion-exchange resin contains amino, ammonium or azine groups.

**15.** Process according to any one of the preceding claims, wherein the anion- exchange resin is in chlorine form.

**16.** Process according to any one of the preceding claims, wherein, in step (7), one or more hafnium-rich fractions are recovered.

**17.** Process according to claim 16, wherein a hafnium-rich fraction comprising a zirconium content of less than or equal to 100 molar ppm expressed relative to Hf is recovered.

**18.** Process according to claim 17, wherein a hafnium-rich fraction comprising a zirconium content of less than or equal to 50 molar ppm expressed relative to Hf is recovered.

**19.** Process according to claim 18, wherein a hafnium-rich fraction comprising a zirconium content of less than or equal to 30 molar ppm expressed relative to Hf is recovered.

**20.** Process according to claim 19, wherein a hafnium-rich fraction comprising a zirconium content of less than or equal to 20 molar ppm expressed relative to Hf is recovered.

**21.** Process according to any one of the preceding claims, wherein, after step (7), the zirconium and hafnium contained in the interstices of the resin, without being bound thereto by ionic interaction, are removed (step 8)).

**22.** Process according to claim 21, wherein, in step (8), the resin is rinsed using a strong inorganic acid solution having from 7 to 12 mol of acid per litre and having a number of mol of acid per litre substantially identical to or greater than the feed solution formed in step (5).

**23.** Process according to claim 21, wherein, in step (8), the resin is purged of its liquid content.

**24.** Process according to claim 23, wherein the resin is then rinsed using a strong inorganic acid solution having from 7 to 12 mol of acid per litre and having a number of mol of acid per litre substantially identical to or greater than the feed solution formed in step (5).

**25.** Process according to any one of the preceding claims, wherein, after step (8), the resin is washed using an aqueous solution having an acid concentration which is between 0 and 7 mol of acid per litre and is lower than that used in the preceding steps, and a fraction enriched with zirconium is recovered.

**26.** Process according to claim 25, wherein water is used.

**27.** Process according to claim 25, wherein at least two aqueous solutions having decreasing acid concentrations are used successively.

**28.** Process according to claim 27, wherein water is used last of all.

**29.** Process according to claim 25, 26 or 27, wherein the acid is HCl.

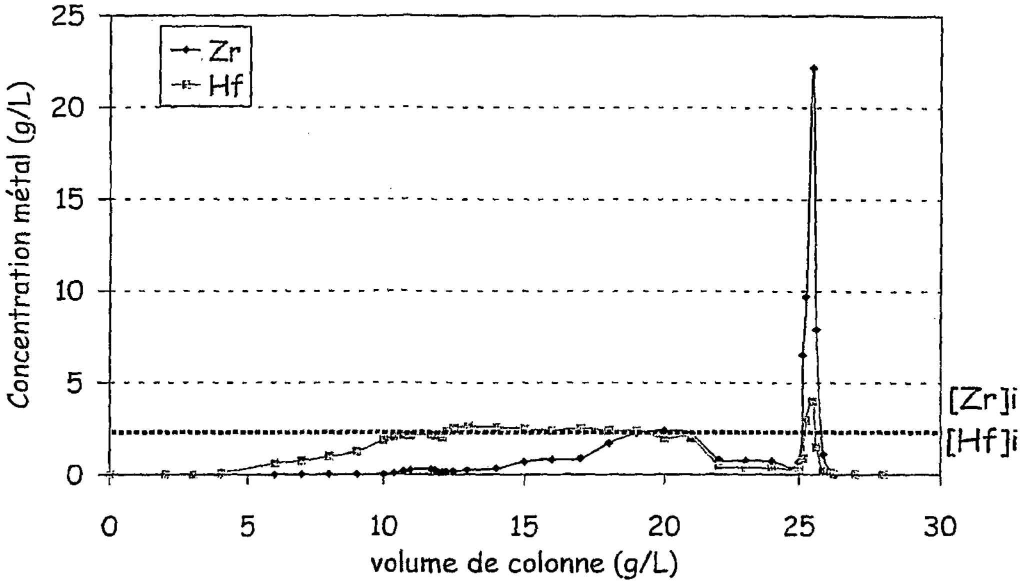


FIGURE 1

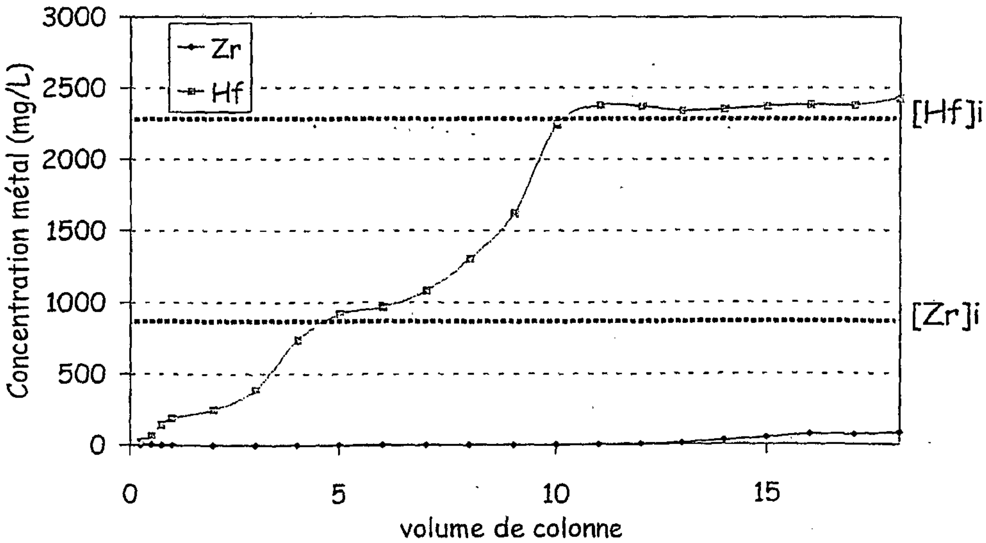


FIGURE 2

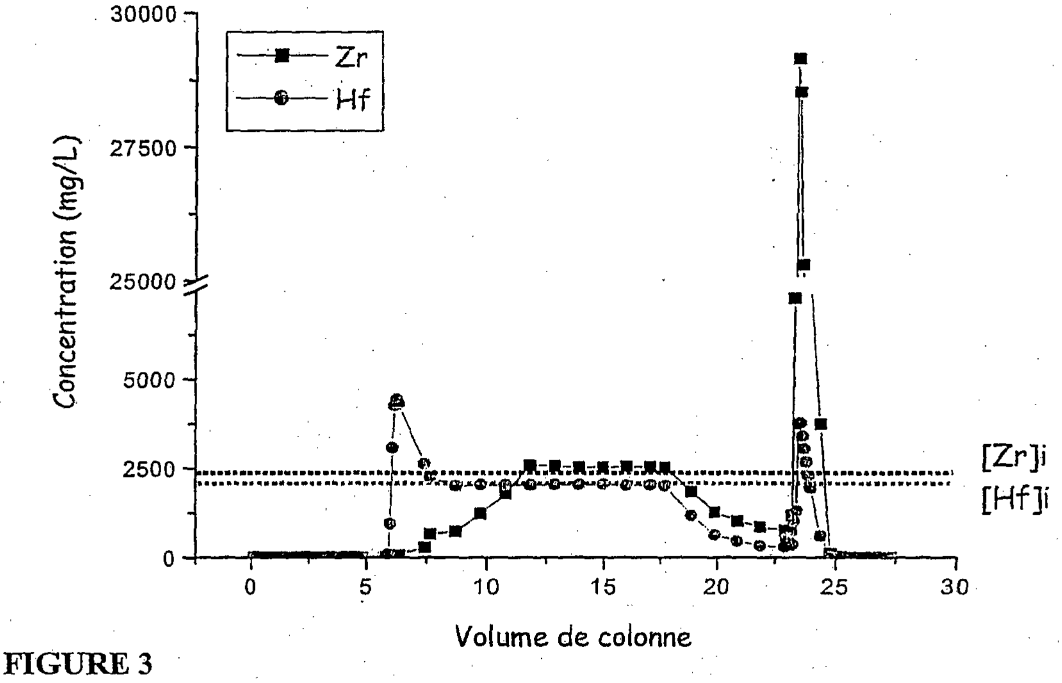


FIGURE 3

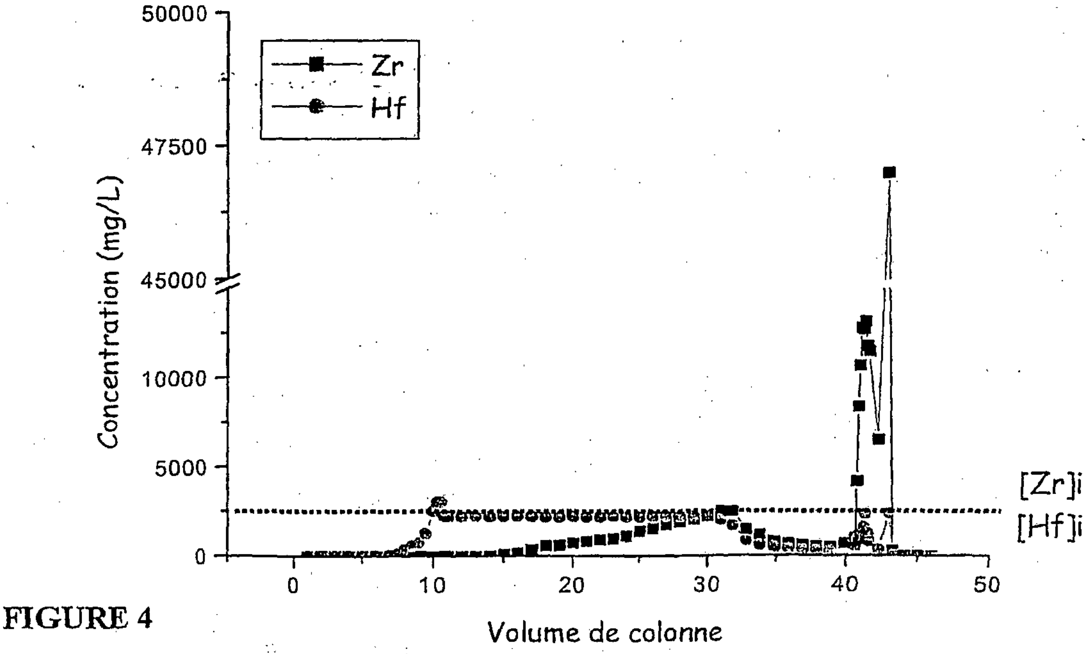


FIGURE 4

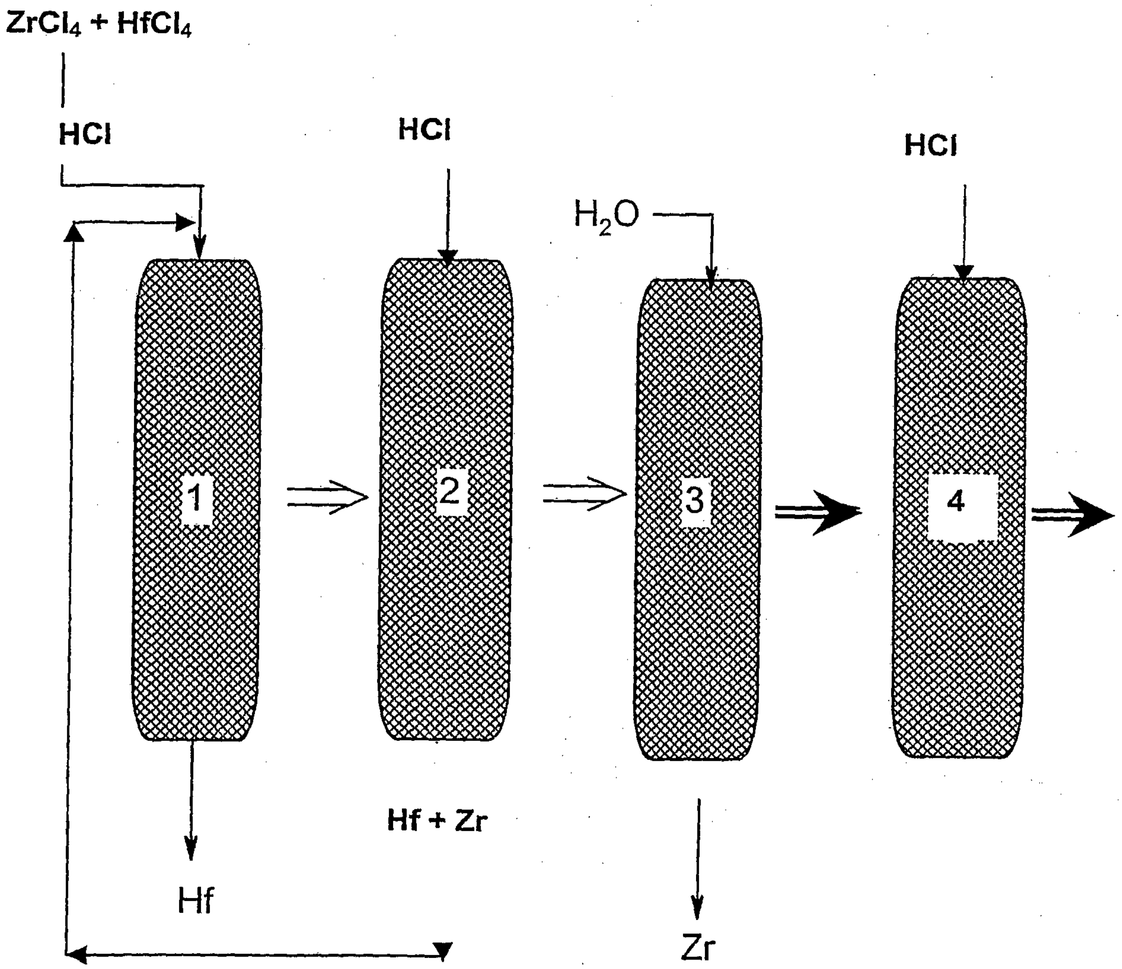


FIGURE 5

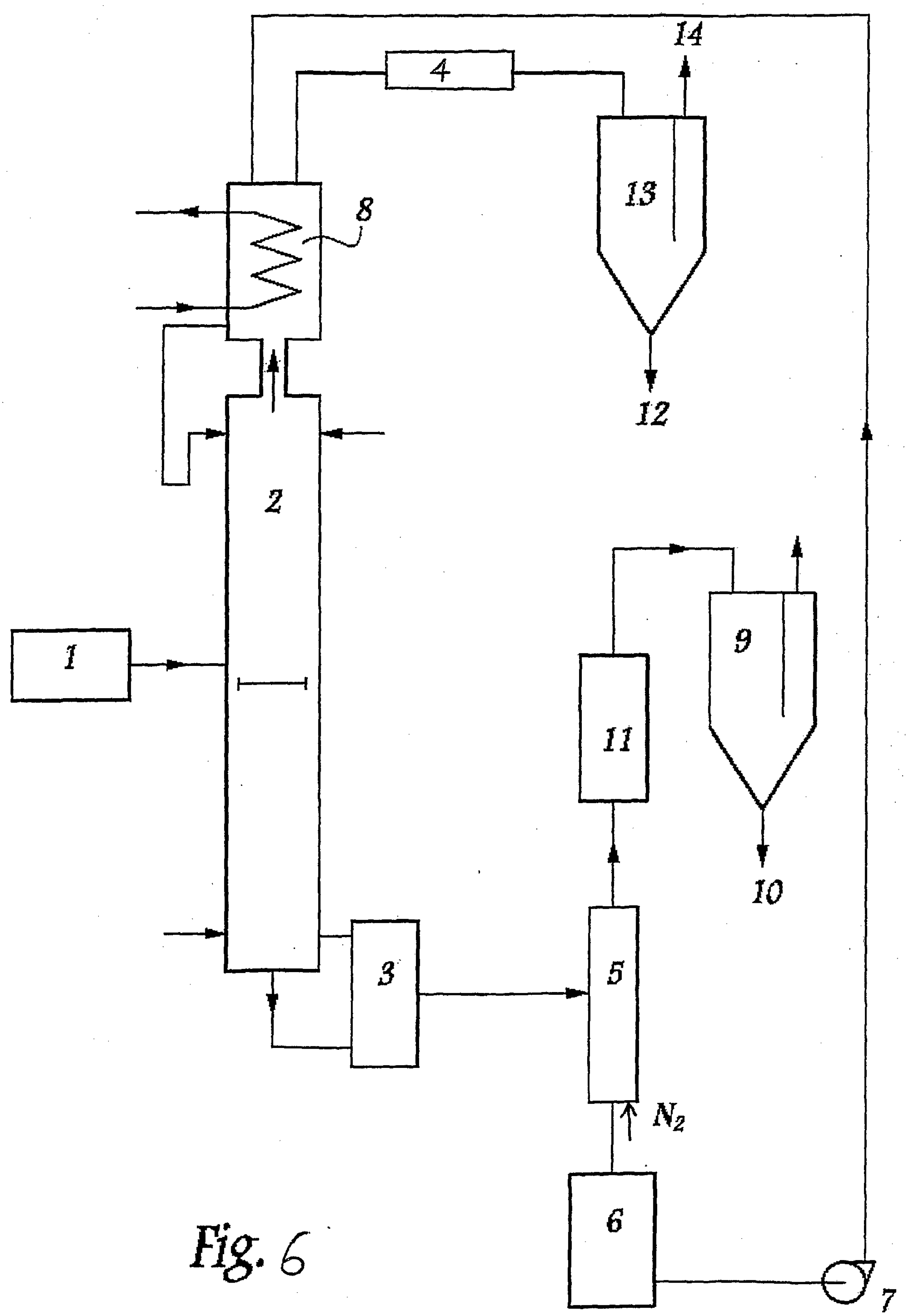


Fig. 6

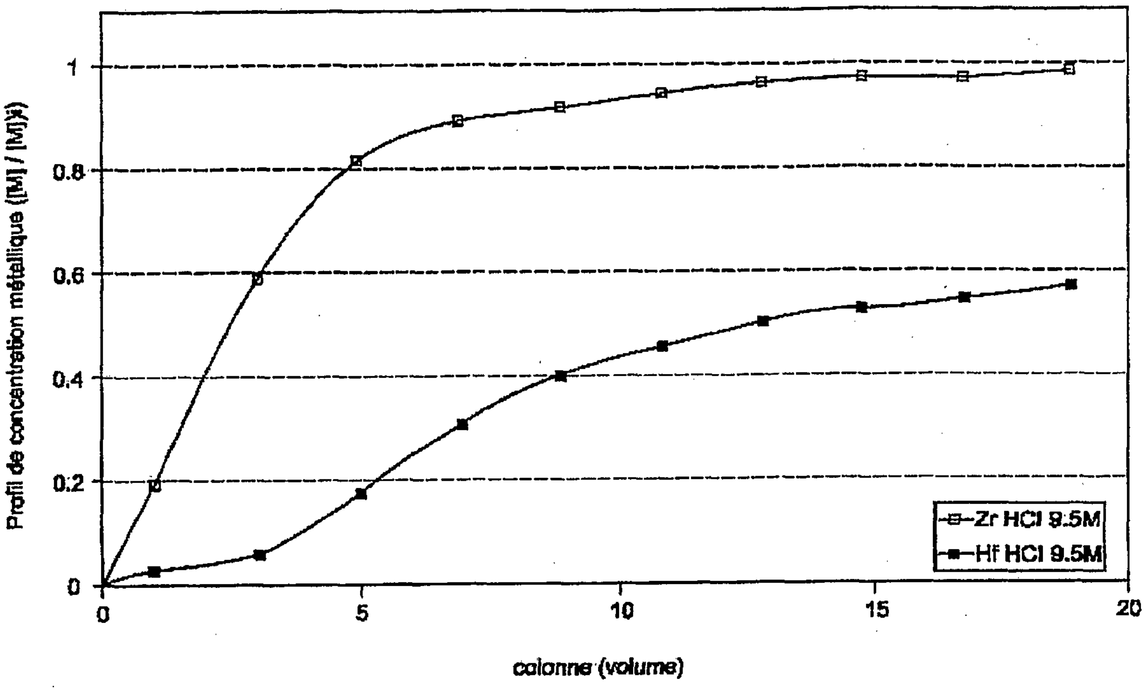
Profil de concentration métallique ([M] / [M]i)
1
0.8
0.6
0.4
0.2
0
0
5
10
15
20
colonne (volume)
Zr HCl 9.5M
Hf HCl 9.5M

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2250707 A
- FR 2629360 A
- US 5762890 A
- FR 2823740 A
- FR 2543162 A


### Littérature non-brevet citée dans la description


- **PAUL PASCAL.** *Nouveau Traité de Chimie minérale,* vol. IX, 254-269